# EUROPEAN PATENT SPECIFICATION

(11) **EP 2 700 216 B1**
(45) Date of publication and mention of the grant of the patent: **05.12.2018**
(21) Application number: 12773799.7
(22) Date of filing: 10.04.2012
(51) Int. Cl.: H04M 3/42, G06F 13/00, H04M 1/00, H04W 12/06, H04W 4/00, H04W 4/08, H04L 29/06

(54) **INFORMATION PROCESSING APPARATUS, WIRELESS COMMUNICATION APPARATUS, COMMUNICATION SYSTEM, AND INFORMATION PROCESSING METHOD**
INFORMATIONSVERARBEITUNGSVORRICHTUNG, DRAHTLOSE KOMMUNIKATIONSVORRICHTUNG, KOMMUNIKATIONSSYSTEM UND INFORMATIONSVERARBEITUNGSVERFAHREN
APPAREIL DE TRAITEMENT D'INFORMATIONS, APPAREIL DE COMMUNICATION SANS FIL ET PROCÉDÉ DE TRAITEMENT D'INFORMATIONS

(30) Priority: 19.04.2011 JP 2011092956
(43) Date of publication of application: 26.02.2014
(73) Proprietor: Sony Corporation, Tokyo 108-0075 (JP)
(72) Inventor: SATO, Masanori, Tokyo 108-0075 (JP); EHARA, Tadashi, Tokyo 108-0075 (JP)
(74) Representative: D Young & Co LLP
(86) International application number: PCT/JP2012/002478
(87) International publication number: WO 2012/144159

(56) References cited:
- EP-A1- 2 661 110
- JP-A- 10 285 281
- JP-A- 2005 311 765
- JP-A- 2006 164 234
- HARIKRISHNA VASANTA ET AL: "Distributed Management of OMA DRM Domains", 28 August 2006 (2006-08-28), INFORMATION SECURITY APPLICATIONS; [LECTURE NOTES IN COMPUTER SCIENCE;;LNCS], SPRINGER BERLIN HEIDELBERG, BERLIN, HEIDELBERG, PAGE(S) 237 - 251, XP019077666, ISBN: 978-3-540-71092-9 * Abstract, Section 2 and subsections Section 3 and subsections *
- "3rd Generation Partnership Project; Technical Specification Group Services and System Aspects; Feasibility study on the security aspects of remote provisioning and change of subscription for Machine to Machine (M2M) equipment (Release 9)", 3GPP DRAFT; 33812-920, 3RD GENERATION PARTNERSHIP PROJECT (3GPP), MOBILE COMPETENCE CENTRE ; 650, ROUTE DES LUCIOLES ; F-06921 SOPHIA-ANTIPOLIS CEDEX ; FRANCE, vol. SA WG3, 14 June 2010 (2010-06-14), XP050435461, [retrieved on 2010-06-14]

## Description

### Technical Field

### CROSS-REFERENCE TO RELATED APPLICATIONS

This application is based upon and claims the benefit of priority from Japanese Patent Application JP 2011-092956, filed on April 19, 2011, the entire contents of which are hereby incorporated by reference.

The present disclosure relates to an information processing apparatus, a communications device, a communications system, and corresponding methods for securely associating communications devices with groups of device having a corresponding connection right.

### Background Art

An expanded functionality is being considered for the 3rd Generation Partnership Project (i.e., 3GPP) that decides the technical specification of public wireless communication networks (see, for example, 3GPP TR 33.812 V9.2.0 (2010-06)).

Using such an expanded functionality, known as "Machine to Machine Equipment," it will become possible to flexibly use information showing what services can be utilized. Such information may be referred to as a Machine Communication Identity Module (MCIM), which is one example of contact authentication information. As an example, it may possible to download an MCIM from a network, and additionally or alternatively, to temporarily invalidate and then revalidate an MCIM within a network.

At present, information corresponding to an MCIM needs to be stored in a physical device called a SIM (Subscriber Identity Module) card. However, if an MCIM could be handled as software, the method of storage could be made more flexible.

### Summary

### Technical Problem

By using the expanded functionality described above, it is possible to conceive new methods of using an MCIM that differ to the past. For example, it would be conceivably possible for an MCIM to be shared by a plurality of wireless communication apparatuses. In such case, it is important for the operations relating to sharing to be easy to carry out and for security to be maintained when sharing the MCIM.

Exemplary embodiments of the present disclosure were conceived in view of the above and aims to share the right to connect to a network between a plurality of wireless communication apparatuses and to maintain security for such sharing.

EP 2661110, which was published on 6 November 2013, relates to a wireless communication apparatus including a reception unit that receives group information to identify a group as an operation input for additional registration with the group including a plurality of wireless communication apparatuses sharing a network connection right to connect to a predetermines network via a wireless line, and a control unit that, when the group information is received, transmits an addition request that requests the additional registration with the group to a management system that manages the group via a wireless line on condition that an approval operation has been performed by one of the wireless communication apparatuses in the group.

"Distributed Management of OMA DRM Domains", by Harikrishna Vasanta et al, presented in Information Security Applications considers version 2.0 of the Open Mobile Alliance's Digital Rights Management Specification, which provides for protected content to be shared amongst a collection of devices in a domain. Domains are created and managed directly by the rights issuer that issues rights to the domain. It is proposed to devolve the management of domains to a domain manager known as Heimdall that acts as a broker between the devices in an authorised domain and any content providers from which content for the domain can be sourced.

### [Solution to Problem]

Particular and preferred aspects are set out in the attached claims.

### [Advantageous Effects of Invention]

According to the disclosed exemplary embodiments, a notable effect whereby the right to connect to a network is shared between a plurality of wireless communication apparatuses and security is maintained for such sharing may be achieved.

### [Brief Description of Drawings]

Figs. 1(a) to 1(c) are simplified diagrams showing one example usage of a plurality of wireless communication devices according to a first exemplary embodiment;
Figs. 2(a) and 2(b) are simplified diagrams showing an example of a group in a case where an MCIM is shared by a plurality of wireless communication devices according to the first exemplary embodiment;
Fig. 3 is a block diagram showing an exemplary system configuration of a communication system, according to the first exemplary embodiment;
Figs. 4(a) and 4(b) are schematically diagrams of a group management database, according to the first exemplary embodiment;
Fig. 5 is a block diagram showing an example of an internal configuration of a wireless communication apparatus, according to the first exemplary embodiment;
Fig. 6 is a diagram showing an example of an addition operation screen displayed by a display unit of a wireless communication apparatus, according to the first exemplary embodiment;
Figs. 7(a) and 7(b) are examples of display screens showing additional authentication results to be displayed on a display unit of a wireless communication apparatus, according to the first exemplary embodiment
Fig. 8 is a flowchart of an exemplary communication process performed by apparatuses of a communication system, according to the first exemplary embodiment;
Fig. 9 is flowchart of an exemplary communication process performed by apparatuses of a communication system, according to the first exemplary embodiment;
Fig. 10 is a flowchart of an exemplary communication process performed by various apparatuses of a communication system, according to the first exemplary embodiment;
Fig. 11 is a flowchart of an exemplary communication process performed by a wireless communication apparatus, according to the first exemplary embodiment;
Fig. 12 is a flowchart of an exemplary communication process performed by by an information processing apparatus, according to the first exemplary embodiment;
[fig.13] Fig. 13 is a flowchart of a first authentication process performed by an information processing apparatus, according to the first exemplary embodiment;
[fig. 14] Fig. 14 is a flowchart of a second authentication process performed by an information processing apparatus, according to the first exemplary embodiment;
[fig.15]Fig. 15 is a block diagram showing a functional configuration of a wireless communication apparatus, according to a second exemplary embodiment;
[fig.16] Figs. 16(a) and 16(b) are diagrams of a display screen for carrying out contactless communication that is displayed on a display unit of a wireless communication apparatus, and states of respective wireless communication apparatuses when contactless communication is carried out, according to the second exemplary embodiment;
[fig.17] Fig. 17 is a diagram showing an example of an addition operation screen displayed on a display unit of a wireless communication apparatus, according to the second exemplary embodiment;
[fig.18] Fig. 18 is a flowchart of an exemplary communication process performed by apparatuses of a communication system, according to the second exemplary embodiment;
[fig.19] Fig. 19 is a diagram of an exemplary contactless communication operation screen displayed on a display unit of a wireless communication apparatus, according to a third exemplary embodiment;
[fig.20]Fig. 20 is a diagram showing an exemplary addition operation screen displayed on a display unit of a wireless communication apparatus, according to the third exemplary embodiment;
[fig.21]Fig. 21 is a flowchart of an exemplary communication process performed by various apparatuses of a communication system, according to the third exemplary embodiment; and
[fig.22]Figs. 22(a) and 22(b) are perspective views of a speaker apparatus according to a modification to the exemplary embodiments.

### Description of Embodiments

Below, exemplary embodiments will be described in detail with reference to the appended drawings. Note that, in this specification and the appended drawings, structural elements that have substantially the same function and structure are denoted with the same reference numerals, and repeated explanation of these structural elements is omitted. The exemplary embodiments will be described in the order stated below.
1. First Exemplary Embodiment (Group Addition Control: Example of Adding a New Device to a Group Sharing an MCIM);
2. Second Exemplary Embodiment (Group Addition Control: Example of Transmission of Group Information to a New Device Using Contactless Communication);
3. Third Exemplary Embodiment (Group Addition Control: Example of Transmitting Information Relating to a New Device to a Registered Device Using Contactless Communication); and
4. Modifications to the Exemplary Embodiments.

### 1. First Embodiment

### a. Example Usage of Wireless Communication Apparatuses

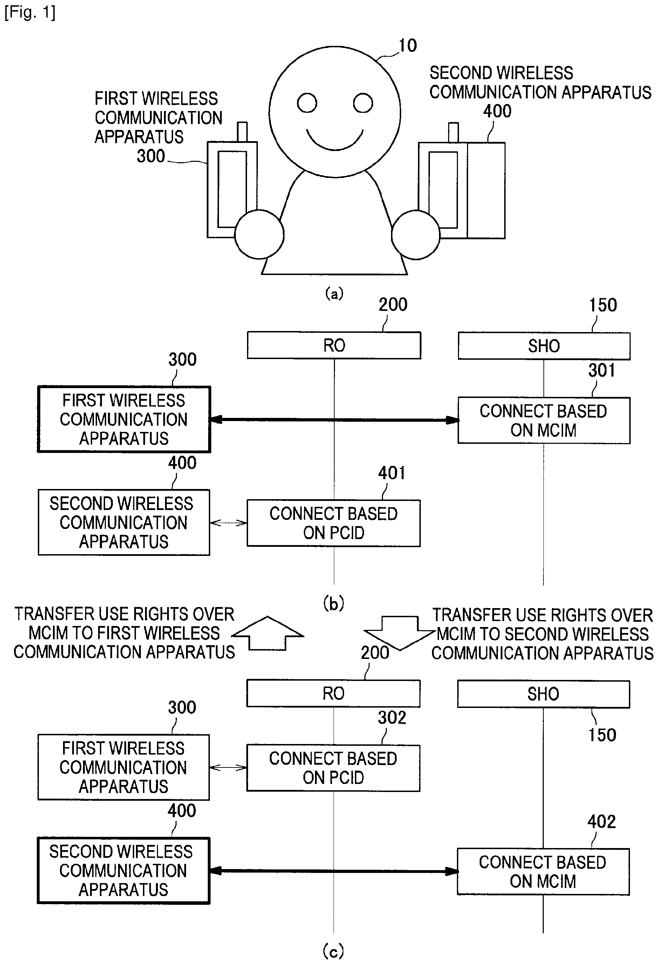

Fig. 1(a) to 1(c) are simplified diagrams showing one exemplary usage of a plurality of wireless communication apparatuses (ordevices), according to a first exemplary embodiment.

Fig. 1(a) shows a state where a plurality of wireless communication apparatuses (a first wireless communication apparatus 300 and a second wireless communication apparatus 400) are used by a user 10. As examples, the first wireless communication apparatus 300 is a mobile telephone apparatus (for example, a "smartphone") and the second wireless communication apparatus 400 is an electronic book display apparatus equipped with a wireless communication function.

Fig. 1(b) and 1(c) show an example of how use rights for an MCIM (Machine Communication Identity Module) are transferred when the MCIM is shared between a plurality of wireless communication apparatuses. In the first exemplary embodiment, an example network configuration composed of an SHO (Selected Home Operator) 150 and an RO (Registration Operator) 200 is shown.

The SHO 150 provides Internet services and the like, and as one example corresponds to a wireless communication provider (for example, a mobile telephone provider) that provides a wireless connection service. The RO 200 also provides services such as initial connection and registration and as one example corresponds to a wireless communication provider (for example, a mobile telephone provider) that provides a wireless connection service. The SHO 150 and the RO 200 are also connected and are capable of communicating with one another.

Note that RO and SHO represent logical roles and although a case where such devices are operated by different businesses is imagined, it would also be possible for the same business to operate both devices. It is also possible for multiple RO and SHO to be present. Also, RO and SHO may be configured as a single information processing apparatus or may be constructed of a plurality of apparatuses. Here, RO and SHO refer to relative roles with respect to a particular wireless communication apparatus in possession of a valid MCIM. This means that it is possible for a device that corresponds to an RO for one wireless communication apparatus to correspond to an SHO for a different wireless communication apparatus.

Here, in Figs. 1(b) and 1(c), a wireless communication apparatus storing a valid MCIM is shown using a bold outline. That is, Fig. 1(b) shows a case where the first wireless communication apparatus 300 stores a valid MCIM and Fig. 1(c) shows a case where the second wireless communication apparatus 400 stores a valid MCIM. Also, as shown in Figs. 1(b) and 1(c), it is possible for the first wireless communication apparatus 300 and the second wireless communication apparatus 400 to connect to the SHO 150 only when such apparatuses store a valid MCIM (301 and 402). Conversely, it is possible for a wireless communication apparatus that does not store a valid MCIM to connect to the RO 200 based on a PCID (Provisional Connectivity Identity) (401 and 302).

Here, an MCIM is one example of contract authentication information and such contract authentication information is information including telephone subscriber information and authentication key information. As one example, an MCIM is contract authentication information (a so-called "software downloadable SIM (Subscriber Identity Module)") that is not limited to a specified communication provider (for example, a mobile telephone provider) when a device is purchased and can be flexibly set by a communication provider after purchase. Also, as an example, the expression "when a valid MCIM is not stored" refers to when an MCIM itself is not stored or when only MCIM that have been invalidated by an MCIM invalidation process are stored.

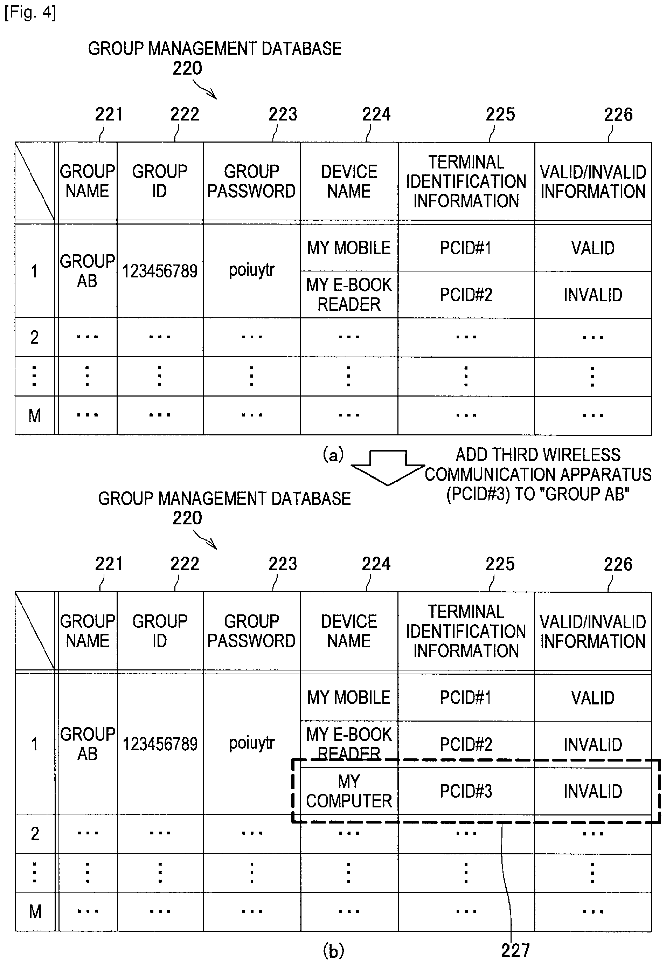

Also, PCID is an identifier (for example, the terminal identification information 225 on a network shown in Fig. 4) for connecting to the RO and is assigned to every wireless communication apparatus (device).

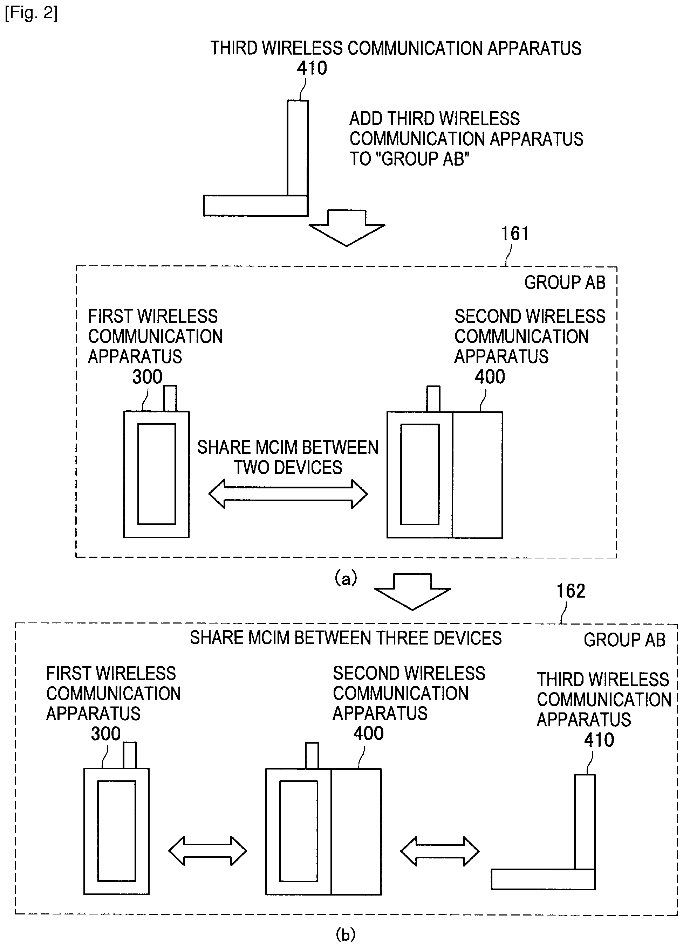

In this way, when use rights over an MCIM are shared by a plurality of wireless communication apparatuses, it is possible to set the plurality of wireless communication apparatuses that participate in such sharing as a single group. An example of a group is shown in Figs. 2(a) and 2(b).

### b. Example of a Group Sharing an MCIM

Figs. 2(a) and 2(b) are simplified diagrams showing an example of a group in a case where an MCIM is shared by a plurality of wireless communication apparatuses according to the first exemplary embodiment.

In Fig. 2(a), an example is shown where a third wireless communication apparatus 410 is added to a group AB (shown by the dotted rectangle 161) composed of the first wireless communication apparatus 300 and the second wireless communication apparatus 400. Note that the expression "group AB" is the name assigned to the group (for example, the "group name 211" shown in Fig. 4). As one example, the third wireless communication apparatus 410 is an information processing apparatus (for example, a notebook personal computer) equipped with a wireless communication function.

Fig. 2(b) shows a case where the third wireless communication apparatus 410 has been added to the group AB (shown by the dotted rectangle 161) shown in Fig. 2(a), so that the group AB becomes composed of three devices (shown by the dotted rectangle 162).

The user 10 is also capable of deleting a desired device out of the three devices that compose the group AB (shown by the dotted rectangle 162) shown in Fig. 2(b) from the group AB.

Here, when a new device is additionally registered in a group, it is preferable for such addition operation to be carried out easily. In addition to facilitating such adding operation, it is also important to maintain security so that unintended devices are not added. It is therefore conceivable to carry out the addition operation using an ID and/or a password. However, if such ID and/or password were to become known by a third party, it would be difficult to maintain security for the addition operation. For this reason, in the first exemplary embodiment, in addition to carrying out authentication that uses a group ID and password, both a device that has already been registered in a group and a new device to be added are used to additionally register the new device in the group.

### c. Example Configuration of Communication System

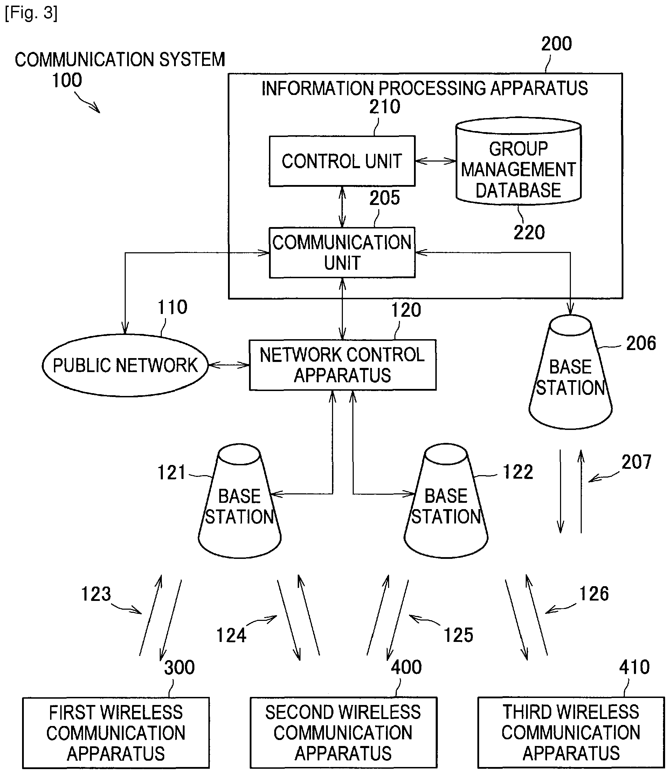

Fig. 3 is a block diagram showing an example system configuration of a communication system 100 according to the first exemplary embodiment.

The communication system 100 includes a public network 110, base stations 121, 122, and 206, a network control apparatus 120, an information processing apparatus 200, the first wireless communication apparatus 300, the second wireless communication apparatus 400, and the third wireless communication apparatus 410.

The public network 110 is a public network such as a telephone network or the Internet. The public network 110 and the network control apparatus 120 are connected via a gateway (not shown). In the same way, the public network 110 and the information processing apparatus 200 are connected via a gateway (not shown).

The network control apparatus 120 is a communication control apparatus managed by a wireless communication provider that provides a wireless connection service and includes an authentication control unit (not shown). This authentication control unit carries out authentication control of wireless communication apparatuses connected via the base stations 121 and 122. Here, aside from special cases, the authentication control unit of the network control apparatus 120 authenticates a wireless communication apparatus storing a valid MCIM (contract authentication information) out of the wireless communication apparatuses connected via the base stations 121 and 122. The network control apparatus 120 also connects the authenticated wireless communication apparatus via the gateway (not shown) to the public network 110.

The network control apparatus 120 is also connected to the information processing apparatus 200 so as to exchange various information with the information processing apparatus 200. Here, a wireless communication apparatus that does not store a valid MCIM (contract authentication information) is capable of connecting (with a limited connection) via the network control apparatus 120 to the information processing apparatus 200 based on the PCID of the wireless communication apparatus.

The base stations 121, 122 are mobile communication base stations (NodeB) that connect the first wireless communication apparatus 300, the second wireless communication apparatus 400, and the third wireless communication apparatus 410, to the network control apparatus 120 via wireless connections 123 to 126.

As one example, in the communication system 100, the respective wireless communication apparatuses are connected via the wireless connections 123 to 126 to the base stations 121, 122 and are connected via the base stations 121, 122 to the network control apparatus 120. The respective wireless communication apparatuses are also connected via the network control apparatus 120 to the information processing apparatus 200. Note that the first wireless communication apparatus 300, the second wireless communication apparatus 400, and the third wireless communication apparatus 410 are respectively capable of connecting to any of the base stations 121, 122 in accordance with the locations at which such apparatuses are being used. Also, in the communication system 100, for a wireless communication apparatus storing a valid MCIM for a communication provider that operates the network control apparatus 120, the network control apparatus 120 and the base stations 121, 122 correspond to an SHO.

Also, a wireless communication apparatus that does not store a valid MCIM (contract authentication information) can connect (with a limited connection) via the wireless connection 207 and the base station 206 to the information processing apparatus 200 based on the PCID of the wireless communication apparatus. Also, in the communication system 100, for a wireless communication apparatus storing a valid MCIM of the communication provider that operates the network control apparatus 120, the information processing apparatus 200 and the base station 206 correspond to an RO. For this reason, in the embodiments of the present disclosure, the information processing apparatus 200 is sometimes referred to as the "RO 200".

The information processing apparatus 200 provides services such as initial connection and registration, and includes a communication unit 205, a control unit 210, and a group management database 220.

The communication unit 205 transmits and receives various information based on control by the control unit 210. The communication unit 205 is connected to the network control apparatus 120, for example, and transmits and receives various information to and from the respective wireless communication apparatuses connected via the network control apparatus 120. For example, the communication unit 205 receives a group addition request (including group information relating to that group), which requests additional registration of a new wireless communication apparatus in a group composed of a plurality of wireless communication apparatuses that share an MCIM, from one or a plurality of wireless communication apparatuses. The communication unit 205 then outputs various information received from wireless communication apparatuses and the like to the control unit 210. Note that the communication unit 205 is an example of a receiving unit.

The control unit 210 carries out various control relating to the wireless communication apparatuses connected via the communication unit 205 and the network control apparatus 120. For example, the control unit 210 receives a group addition request from one or a plurality of the wireless communication apparatuses via the communication unit 205. In this way, when a group addition request has been received, the control unit 210 controls the additional registration in a group of a new wireless communication apparatus based on the group information included in such group addition request. Here, if group addition requests have been received from both a wireless communication apparatus that has already been registered in the group and a new wireless communication apparatus, the control unit 210 carries out additional registration based on the group information included in the respective group addition requests.

As one example, the control unit 210 extracts a group that matches the group information included in the group addition request from the group management database 220 and registers the new wireless communication apparatus so as to be associated with the matching group in the group management database 220. That is, the control unit 210 determines whether the group information included in such group addition requests matches and carries out additional registration of the new wireless communication apparatus only when the group information matches.

Also, when a new wireless communication apparatus has been additionally registered in accordance with a group addition request, the control unit 210 carries out control to transmit, via wireless connections, notification of this to the respective wireless communication apparatuses that transmitted the group addition requests and has such notification displayed.

The group described above can be understood as a group that shares one or more comment network connection rights. Such network connection rights are the right to connect to a specified network (for example, the public network 110) via a wireless connection and as one example correspond to use rights over an MCIM. That is, the network connection rights are rights for connecting to base stations operated by a communication provider based on an MCIM (contract authentication information) for connecting to such base stations. For example, the presence or absence of such network connection rights can be decided according to the presence or absence of use rights over an MCIM.

The group management database 220 is a database for managing groups which are each composed of a plurality of wireless communication apparatuses sharing an MCIM. Note that the group management database 220 will be described in detail with reference to Figs. 4(a) and 4(b). The group management database 220 is one example of a "storage unit" referred to in the patent claims.

Here, an example will be described where use rights over the MCIM are transferred (i.e., where the network connection rights are transferred) in the communication system 100. For example, the MCIM is stored in advance in the respective wireless communication apparatuses. Based on an instruction from the control unit 210, the network control apparatus 120 is capable of transferring the use rights over the MCIM by validating or invalidating the MCIM of the respective wireless communication apparatuses.

Instead of storing the MCIM in the respective wireless communication apparatuses, it is also possible to transfer use rights over the MCIM by transferring the MCIM itself. As one example, a case where use rights over the MCIM are transferred from the first wireless communication apparatus 300 to the second wireless communication apparatus 400 is imagined. For example, an MCIM transfer request is transmitted from the first wireless communication apparatus 300 to the control unit 210. In this case, based on an instruction from the control unit 210, the MCIM stored in the first wireless communication apparatus 300 is invalidated (deleted) by the network control apparatus 120. In addition, transfer information (setting information including the MCIM) is transmitted via the control unit 210 from the network control apparatus 120 to the second wireless communication apparatus 400. By storing the MCIM included in the transfer information in the second wireless communication apparatus 400, a valid MCIM is set in the second wireless communication apparatus 400.

### d. Example Configuration of Group Management Database

Figs. 4(a) and 4(b) are tables schematically showing the group management database 220 according to the first exemplary embodiment. Note that in Fig. 4(a), a case where the first wireless communication apparatus 300 and the second wireless communication apparatus 400 are registered in the group AB is shown. Also, in Fig. 4(b), a case where the third wireless communication apparatus 410 is additionally registered in the group AB shown in Fig. 4(a) is shown.

In the group management database 220, a group name 221, a group ID 222, a group password 223, a device name 224, terminal identification information 225, and valid/ invalid information 226 are stored so as to be associated with one another in group units. Such information is successively updated by the control unit 210 based on requests (group addition requests, group deletion requests) from the respective wireless communication apparatuses, for example.

A name assigned to a group is stored in the group name 221. Such name is stored for example when a group is generated.

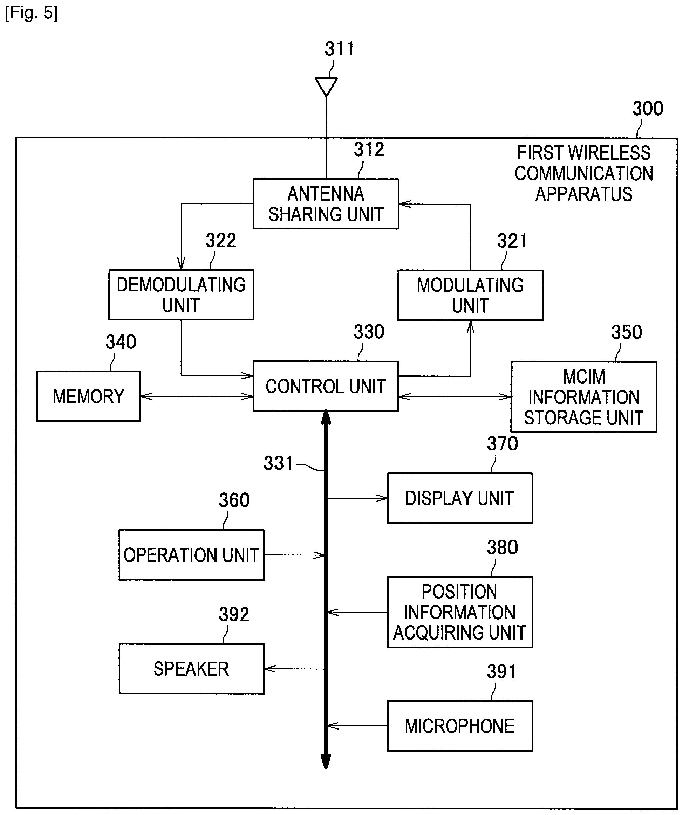

A group ID assigned to a group is stored in the group ID 222. A password assigned to a group is stored in the group password 223. A group addition request is made using such ID and password. The respective wireless communication apparatuses belonging to a group may store in advance the ID and password assigned to such group (for example, storage in a memory 340 shown in Fig. 5). Alternatively, an arrangement may be used where the ID and password are not stored in a wireless communication apparatus and are inputted each time by the user.

Names assigned to devices are stored in the device name 224. As one example, such names are stored when devices are newly added to a group.

Terminal identification numbers of wireless communication apparatuses (devices) are stored in the terminal identification information 225. Terminal identification information is identification information for identifying a wireless communication apparatus, and as one example a PCID is stored. In Figs. 4(a) and 4(b), "PCID#1" in the terminal identification information 225 corresponds to the first wireless communication apparatus 300. In the same way, "PCID#2" in the terminal identification information 225 corresponds to the second wireless communication apparatus 400 and "PCID#3" in the terminal identification information 225 corresponds to the third wireless communication apparatus 410.

Information showing whether the MCIM at the wireless communication apparatus is valid or invalid (or an MCIM is yet to be stored) is stored in the valid/invalid information 226. Note that in Fig. 4(a), for ease of explanation, a wireless communication apparatus where the MCIM is valid is shown as "valid" and a wireless communication apparatus where the MCIM is invalid is shown as "invalid".

### e. Example Configuration of Wireless Communication Apparatus

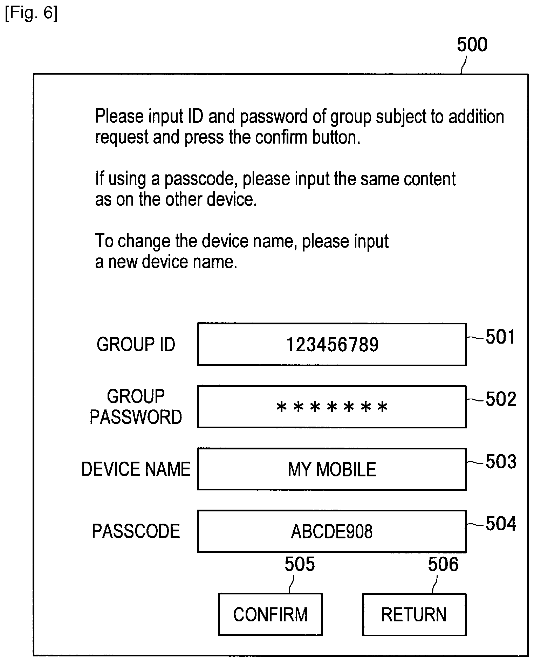

Fig. 5 is a block diagram showing an example of the internal configuration of the first wireless communication apparatus 300 according to the first exemplary embodiment. Note that since the internal configurations of the second wireless communication apparatus 400 and the third wireless communication apparatus 410 are the same as that of the first wireless communication apparatus 300, description thereof is omitted here. Also, in Fig. 6 onwards, when describing the second wireless communication apparatus 400 or the third wireless communication apparatus 410, names and reference numerals corresponding to the first wireless communication apparatus 300 are used.

The first wireless communication apparatus 300 includes an antenna 311, an antenna sharing unit 312, a modulating unit 321, a demodulating unit 322, a control unit 330, a tangible, non-transitory computer-readable storage medium, an example of which is memory 340, and the MCIM information storage unit 350. The first wireless communication apparatus 300 also includes an operation unit 360, a display unit 370, a location information acquiring unit 380, a microphone 391, and a speaker 392. Such components are connected by a bus 331. As one example, the first wireless communication apparatus 300 is realized by a mobile telephone apparatus capable of telephone calls and data communication.

For example, when a reception process is carried out, radio waves received by the antenna 311 are demodulated via the antenna sharing unit 312 by the demodulating unit 322 and demodulated reception data is supplied to the control unit 330. When the reception process is an incoming call process, the demodulated reception data (audio data) is outputted via the control unit 330 from the speaker 392 as sound.

When, for example, a transmission process is carried out, the transmission data outputted by the control unit 330 is modulated by the modulating unit 321 and the modulated transmission data is transmitted via the antenna sharing unit 312 from the antenna 311. When the transmission process is an outgoing call process, audio data inputted from the microphone 391 is modulated via the control unit 330 by the modulating unit 321 and modulated transmission data (audio data) is transmitted via the antenna sharing unit 312 from the antenna 311.

The control unit 330 carries out various control based on instructions (e.g., a control program) stored in the memory 340. As one example, the control unit 330 is constructed of a microprocessor. For example, the control unit 330 is connected to the modulating unit 321 and the demodulating unit 322 and transmits and receives various data to and from the network control apparatus 120 connected via the base stations 121, 122. The control unit 330 also carries out a connection process that connects to the RO 200 (with a limited connection) via a wireless connection based on the PCID, for example, without using the MCIM. Note that the control unit 330 is one example of a "transmission control unit" and a "display control unit."

The memory 340 is a memory storing instructions (e.g., a control program) that may be executed by the microprocessor to enable the control unit 330 to carry out various control, in addition to transmission data, reception data, and the like. As examples, the memory 340 is constructed of ROM (Read Only Memory) and/or RAM (Random Access Memory). Terminal identification information (PCID#1) for specifying the first wireless communication apparatus 300 and a device name (for example, the device name 224 shown in Fig. 4(a)) of the first wireless communication apparatus 300 are also stored in the memory 340. Such device name is registered for example by a user operation. The ID and password assigned to the group AB to which the first wireless communication apparatus 300 belongs (as one example, the group ID 222 and the group password 223 shown in Fig. 4(a)) are also stored in the memory 340. As one example, such group ID and password are included in a group addition authentication result given in response to a group addition request, transmitted from the information processing apparatus 200, and stored in the memory 340.

The MCIM information storage unit 350 is a memory storing an MCIM (contract authentication information). As the MCIM information storage unit 350, as examples it is possible to use a UICC (Universal Integrated Circuit) card or a dedicated memory for securely storing an MCIM. Note that when a UICC card is used as the MCIM information storage unit 350, instead of the MCIM being permanently written, a card capable of a validation process and an invalidation process for the MCIM is used. That is, a device that enables the control unit 330 to carry out a validation process and an invalidation process for an MCIM based on transfer information that has been received from the antenna 311 and demodulated is used. Also, a device that allows the MCIM to be rewritten is used. Note that the validation process and invalidation process for the MCIM can be carried out according to the validation process and invalidation process defined by 3GPP (Third Generation Partnership Project). Also, by providing a secure region in the memory 340, the MCIM information storage unit 350 may be provided inside the memory 340.

Here, when an operation input for additional registration in a group has been received by the operation unit 360, the control unit 330 carries out control to transmit a group addition request via a wireless connection to the RO 200. As one example, such group addition request requests additional registration in the group of a wireless communication apparatus aside from the wireless communication apparatuses that compose such group and includes group information (for example, an ID and password of a group) stored in the memory 340.

When a group addition request has been received, the RO 200 additionally registers a new wireless communication apparatus in the group based on the group information included in such group addition request.

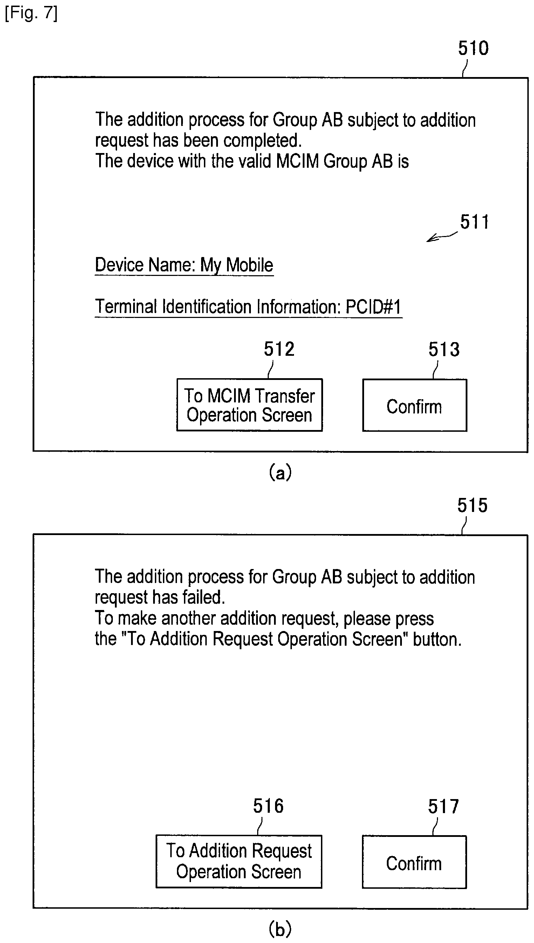

Also, when notification of additional registration of the new wireless communication apparatus in a group in accordance with the group addition request has been received from the RO 200 via the wireless connection, the control unit 330 carries out control to display such notification. Example displays of such a notification are shown in Figs. 7(a) and 7(b).

Also, when for example an operation input for deleting any of the wireless communication apparatuses that compose a group from such group has been received, the control unit 330 transmits a group deletion request for deletion of the wireless communication apparatus to be deleted from the group to the RO 200. The RO 200 then carries out a deletion process for deleting the wireless communication apparatus to be deleted from the group.

The operation unit 360 is an operation receiving unit receiving an operation input made by the user and outputs a signal in accordance with the received operation input to the control unit 330. The operation unit 360 includes various keys such as numeric keys and/or alphabet keys and receives an instruction operation (or "specified operation") made by the user who designates a group addition request.

The display unit 370 is a display unit that displays various information (text information, time information, and the like) based on control by the control unit 330. As one example, the display unit 370 displays various information (for example, the display screens shown in Figs. 6, 7(a), and 7(b)) relating to a group addition request. Note that as examples, it is possible to use a display panel such as an organic EL (Electro Luminescence) panel or an LCD (Liquid Crystal Display) panel. It is also possible to integrally construct the operation unit 360 and the display unit 370 using a touch panel that enables the user to make an operation input by touching or placing his/her finger close to a display screen.

The location information acquiring unit 380 acquires location information showing the location where the first wireless communication apparatus 300 is present and outputs the acquired location information to the control unit 330. As one example, the location information acquiring unit 380 can be realized by a GPS (Global Positioning System) unit that calculates the location information using GPS signals received by a GPS signal reception antenna (not shown). The calculated location information includes various data relating to location, such as latitude, longitude, and altitude, at the time the GPS signals were received. It is also possible to use a location information acquiring apparatus acquiring location information according to a different method of acquiring location information. For example, it is possible to derive location information using access point information according to a wireless LAN (Local Area Network) present in the periphery and to use a location information acquiring apparatus that acquires such location information.

### f. Example Display of Addition Operation Screen

Fig. 6 is a diagram showing one example of an addition operation screen display by the display unit 370 of the first wireless communication apparatus 300 according to the first exemplary embodiment. The addition operation screen 500 shown in Fig. 6 is a display screen for carrying out an addition operation for adding a wireless communication apparatus aside from the first wireless communication apparatus 300 to the group AB.

The addition operation screen 500 includes a group ID input region 501, a group password input region 502, a device name display region 503, a passcode input region 504, a confirm button 505, and a return button 506.

The group ID input region 501 is a region for inputting the ID of the group to which the other wireless communication apparatus is to be added.

The group password input region 502 is a region for inputting a password of the group to which the other wireless communication apparatus is to be added. That is, the ID of the group AB to which the first wireless communication apparatus 300 belongs is inputted into the group ID input region 501 and the password of the group AB to which the first wireless communication apparatus 300 belongs is inputted into the group password input region 502. Note that since the password is not displayed on the actual screen for security purposes, the password is shown as "******" in Fig. 6. Passwords are also shown as "******" or the like in other display screens.

The device name display region 503 is a region in which the device name registered in the first wireless communication apparatus 300 is displayed. As one example, it is assumed here that "My Mobile" is stored in the memory 340 as the device name of the first wireless communication apparatus 300. In this case, the device name "My Mobile" registered in the first wireless communication apparatus 300 is stored in the device name 224 of the group management database 220. To change the device name "My Mobile" stored in the device name 224, a new device name can be inputted into the device name display region 503.

The passcode input region 504 is a region for inputting information associated with a user, for example, a passcode used in an authentication process when adding another wireless communication apparatus. Note that the passcode is a shared code (in other words, a temporary password) used only in a special authentication process (for example, an authentication process relating to a group addition request) and that by using a passcode together with a password, it is possible to further improve the security of group registration. As one example, it is still possible to maintain security for group registration even when the ID and password of a group have leaked out.

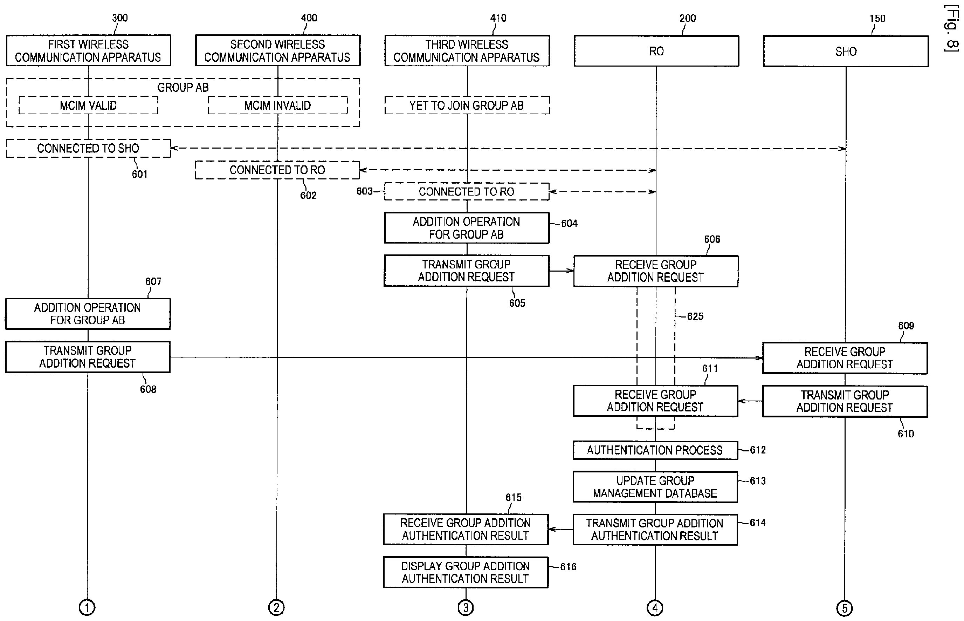

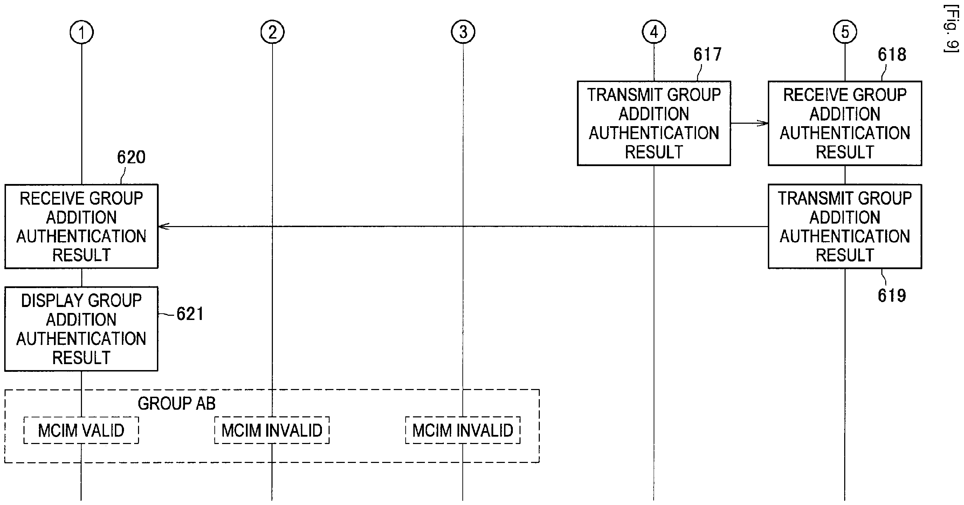

Note that it is possible to input a passcode as necessary into the addition operation screen 500. However, in cases where a passcode is not inputted, the time (acceptance period) set for the authentication process will be set shorter. Such change to the acceptance period will be described in detail with reference to Figs. 8 and 9.

The confirm button 505 is a button that is pressed after the various operations described above (input operation, selection operation) have been carried out and is used to confirm the content of such operations.

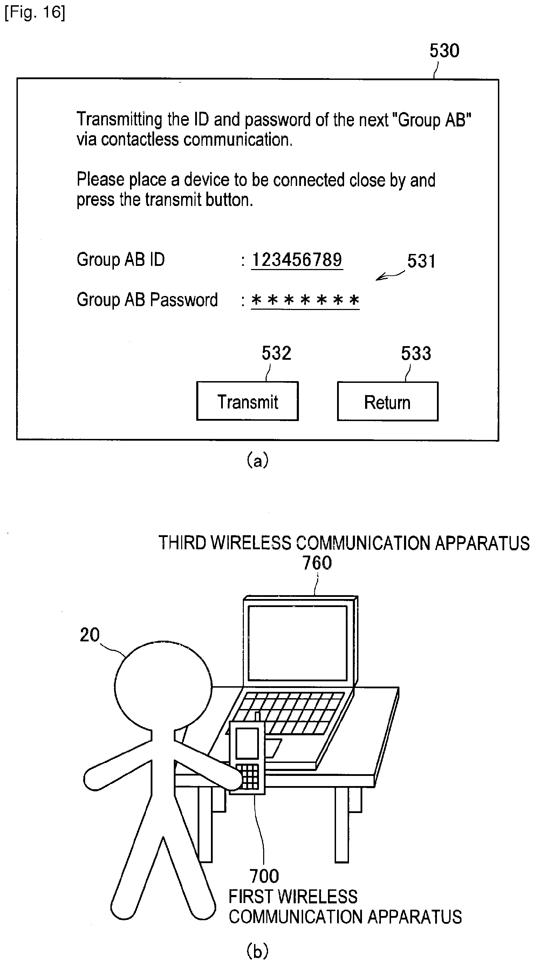

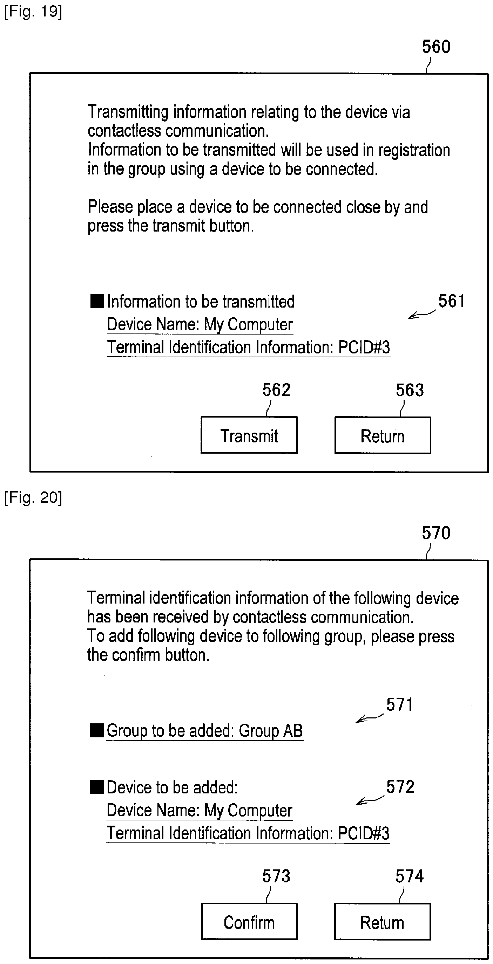

The return button 506 is a button pressed when returning to a display screen that was displayed immediately before the addition operation screen 500, for example. Note that since the return buttons 533, 563 and the like shown in drawings such as Figs. 16 and 19 are substantially the same, description of such buttons is omitted for such drawings.

Note that although only the addition operation screen 500 displayed on the first wireless communication apparatus 300 is shown in Fig. 6, it is assumed that the addition operation screen displayed on the wireless communication apparatus to be added is substantially the same. However, in the addition operation screen displayed on the wireless communication apparatus to be added, the device name of the wireless communication apparatus to be added is displayed in the device name display region 503.

### g. Example Display of Addition Authentication Result

Figs. 7(a) and 7(b) are diagrams showing examples of a display screen for the addition authentication result that is displayed by the display unit 370 of the first wireless communication apparatus 300 according to the first exemplary embodiment. The display screens 510 and 515 shown in Figs. 7(a) and 7(b) are screens displaying addition authentication results in response to an addition operation for adding a wireless communication apparatus to the group AB. More specifically, Fig. 7(a) shows the display screen 510 showing a message that addition to the group was successfully authenticated for such addition operation and Fig. 7(b) shows the display screen 515 showing a message that authentication of the group addition failed for such addition operation.

The display screen 510 shown in Fig. 7(a) displays a message showing that group addition was successfully authenticated and is additionally provided with a device display region 511 showing the device with a valid MCIM, a button 512 for switching to an MCIM transfer operation screen, and a confirm button 513.

The device display region 511 showing the device with a valid MCIM is a region displaying information (device information) relating to a device with a valid MCIM out of the devices that belong to the group subjected to additional registration. For example, the content of the group management database 220 is included in the group addition authentication result and the device information is displayed based on such content.

The button 512 for switching to an MCIM transfer operation screen is a button which is pressed when switching to a display screen for carrying out an operation for transferring the MCIM between devices that belong to the group subjected to the additional registration.

The confirm button 513 is a button pressed by the user after confirming the additional registration in the group and confirming the device with the valid MCIM. When the confirm button 513 has been pressed, a specified display screen (for example, an initial screen) is displayed.

The display screen 515 shown in Fig. 7(b) displays a message showing that authentication of the group addition failed and is additionally provided with a button 516 for switching to an addition request operation screen and a confirm button 517.

The button 516 for switching to an addition request operation screen is a button pressed when switching to a display screen (for example, the addition operation screen 500 shown in Fig. 6) for repeating an addition operation for adding the wireless communication apparatus, for which authentication of the group addition failed, to the group AB.

The confirm button 517 is a button pressed by the user after confirming that authentication of the group addition failed. When the confirm button 513 has been pressed, a specified display screen (for example, an initial screen) is displayed.

Note that although only the display screens 510 and 515 displayed on the first wireless communication apparatus 300 are shown in Figs. 7(a) and 7(b), it is assume that the display screens displayed on the wireless communication apparatus to be added are substantially the same.

### h. Example of Communication When Carrying Out Additional Registration Using a Plurality of Devices

Figs. 8 and 9 are sequence charts showing an example of the communication process carried out between the apparatuses that compose the communication system 100 according to the first exemplary embodiment.

In Figs. 8 and 9, an imaginary case is explained where the group AB is composed of the first wireless communication apparatus 300 and the second wireless communication apparatus 400 and the first wireless communication apparatus 300 is storing a valid MCIM. Also, in Figs. 8 and 9, an example of a communication process when additionally registering the third wireless communication apparatus 410 in the group AB by operating the first wireless communication apparatus 300 and the third wireless communication apparatus 410 that is yet to subscribe to the group AB is shown. Here, an example is described where group addition requests are made by first operating the third wireless communication apparatus 410 and then operating the first wireless communication apparatus 300. Note that in Figs. 8 and 9, it is assumed that the first wireless communication apparatus 300 is connected to the SHO 150 (601) and that the second wireless communication apparatus 400 and the third wireless communication apparatus 410 are connected to the RO 200 (602, and 603).

First, according to a user operation, a display screen for carrying out an addition operation for the group AB is displayed on the display units 370 of the first wireless communication apparatus 300 and the third wireless communication apparatus 410. As one example, the addition operation screen 500 shown in Fig. 6 (except that the respective input regions are blank) is displayed by the display unit 370 of the first wireless communication apparatus 300. The addition operation screen 500 shown in Fig. 6 (except that "My Computer" is displayed in the device name display region 503 and the respective input regions are blank) is also displayed by the display unit 370 of the third wireless communication apparatus 410.

Here, in the addition operation screen 500 shown in Fig. 6, the ID and the password of the group AB are inputted into the group ID input region 501 and the group password input region 502 (604 and 607). Also, when an authentication process using a passcode is desired, the passcode desired by the user is inputted into the passcode input region 504 (604 and 607). Note that the ID and password of the group AB and the passcode are examples of "group information" relating to the group AB. The passcode is also one example of "specified information" included in the group information. After such input operations have been carried out, the confirm button 505 is pressed (604 and 607).

Note that the ID and password of the group AB are stored in the memory 340 of the first wireless communication apparatus 300. This means that by using the ID and password of the group AB stored in the memory 340, it is possible to omit the operation inputs into the group ID input region 501 and the group password input region 502. That is, the content (the ID and password assigned to the group AB) stored in the memory 340 of the first wireless communication apparatus 300 are displayed in the group ID input region 501 and the group password input region 502 of the addition operation screen 500. By doing so, it becomes unnecessary for the user to input the ID and password of the group AB and the user can instead simply confirm the displayed content for such information.

As described above, when an addition operation for the group AB has been received at the third wireless communication apparatus 410 (604), a group addition request corresponding to such addition operation is transmitted from the third wireless communication apparatus 410 to the RO 200 (605 and 606). In this case, since the third wireless communication apparatus 410 is connected to the RO 200 (603), the group addition request is transmitted directly from the third wireless communication apparatus 410 to the RO 200 (605 and 606).

When an addition operation for the group AB has been received at the first wireless communication apparatus 300 (607), a group addition request corresponding to such addition operation is transmitted from the first wireless communication apparatus 300 to the RO 200 (608 to 611). In this case, since the first wireless communication apparatus 300 is connected to the SHO 150 (601), the group addition request is transmitted from the information processing apparatus 200 via the SHO 150 to the R200 (608 to 611).

A group addition request includes various information inputted into the addition operation screen 500 and identification information (the terminal identification information stored in the memory 340) of the device that made the group addition request. As examples, the various information inputted into the addition operation screen 500 is the ID and password of the group and, if a passcode has been inputted by a user operation, such passcode. Also, as the identification information of the device that made the group addition request, the terminal identification information (PCID#1) is included in the group addition request from the first wireless communication apparatus 300 and the terminal identification information (PCID#3) is included in the group addition request from the third wireless communication apparatus 410.

When the RO 200 first receives the group addition request (606), the control unit 210 starts to monitor whether another group addition request is received before an acceptance period has elapsed (e.g., a range in a vertical direction shown by the dotted line 625 in Fig. 8).

Here, it is assumed that the length of the acceptance period (the range shown by the dotted line 625) changes in accordance with whether a passcode is included in the group addition request received first. For example, if a passcode is included in the group addition request received first, a first value is set as the acceptance period. Meanwhile, if a passcode is not included in the group addition request received first, a second value is set as the acceptance period. Here, it is assumed that the second value is smaller than the first value. As one example, it is possible to set ten seconds to two minutes as the first value. In such case, as one example it is possible to set a value that is half of the first value (e.g., five seconds to one minute) as the second value.

If the RO 200 receives another group addition request before the acceptance period set in this way has elapsed (611), the control unit 210 carries out the authentication process for the received group addition requests based on the content of the group management database 220 (612).

More specifically, it is determined whether the ID and password of the group included in the received group addition requests match the ID and password of a group stored in the group management database 220. If a group whose ID and password respectively match is present, the control unit 210 authenticates the additional registration of the third wireless communication apparatus 410 related to the received group addition requests.

Meanwhile, if a passcode is included in the group addition request received first, it is determined whether the passcodes included in the respective group addition requests that have been received match. In such case, if a group whose ID and password respectively match is present and the passcodes included in the respective group addition requests also match, the control unit 210 authenticates the additional registration of the third wireless communication apparatus 410 related to the received group addition requests.

If the authentication according to the authentication process relating to the received group addition requests succeeds (612), the control unit 210 updates the content of the group management database 220 (613). That is, in the group management database 220, the third wireless communication apparatus 410 is additionally registered in the group AB (i.e., updating from the state shown in Fig. 4(a) to the state shown in Fig. 4(b) (the dotted rectangle 227).

Here, a case is imagined where the RO 200 does not receive another group addition request before the acceptance period (the range shown by the dotted line 625) elapses or the authentication according to the authentication process relating to the received group addition requests has failed (612). In such a case, the content of the group management database 220 is not updated and a group addition authentication result showing that addition to the group related to the group addition request was not possible is transmitted to the first wireless communication apparatus 300 and the second wireless communication apparatus 400. Such group addition authentication result is then displayed by the first wireless communication apparatus 300 and the third wireless communication apparatus 410. Here, one example of when authentication fails is when at least one of the ID and password of the group included in the respective group addition requests that have been received does not match the content of the group management database 220. When a passcode is included in the first group addition request, there are also cases where the two passcodes do not match or where a passcode is not included in the next group addition request.

Next, the RO 200 transmits the group addition authentication result showing addition to the group to the third wireless communication apparatus 410 (614 and 615). When a group addition authentication result showing addition to the group has been received (615), a message showing the result is displayed on the display unit 370 of the third wireless communication apparatus 410 (616). One example display is shown in Fig. 7(a). Here, as described above, the third wireless communication apparatus 410 is connected to the RO 200 (603). For this reason, the group addition authentication result is directly transmitted from the RO 200 to the third wireless communication apparatus 410 (614 to 616).

The RO 200 also transmits the group addition authentication result showing addition to the group to the first wireless communication apparatus 300 (617 to 620). When a group addition authentication result showing addition to the group has been received (620), a message showing the result is displayed on the display unit 370 of the first wireless communication apparatus 300 (621). One example display is shown in Fig. 7(b). Here, as described above, the first wireless communication apparatus 300 is connected to the SHO 150 (601). For this reason, the group addition authentication result is transmitted from the RO 200 via the SHO 150 to the first wireless communication apparatus 300 (617 to 620).

Note that although an example where the third wireless communication apparatus 410 transmits a group addition request first is shown in Fig. 8, the first wireless communication apparatus 300 may transmit a group addition request first. In such case, monitoring for the reception of a group addition request from the third wireless communication apparatus 410 is carried out from reception by the RO 200 of the group addition request from the first wireless communication apparatus 300 until the acceptance period (the range shown by the dotted line 625) elapses.

In this way, the control unit 210 additionally registers the third wireless communication apparatus 410 in the group AB on the condition that the next group addition request is received before the acceptance period from the reception of the first group addition request elapses. The control unit 210 is also capable of changing the length of the acceptance period based on whether passcodes are included in the two group addition requests. For example, the acceptance period when at least one out of the two group addition requests does not include a passcode can be set shorter than the acceptance period when the two group addition requests both include a passcode.

### i. Example of Communication When Additional Registration is Carried Out Using a Plurality of Devices Not Storing a Valid MCIM

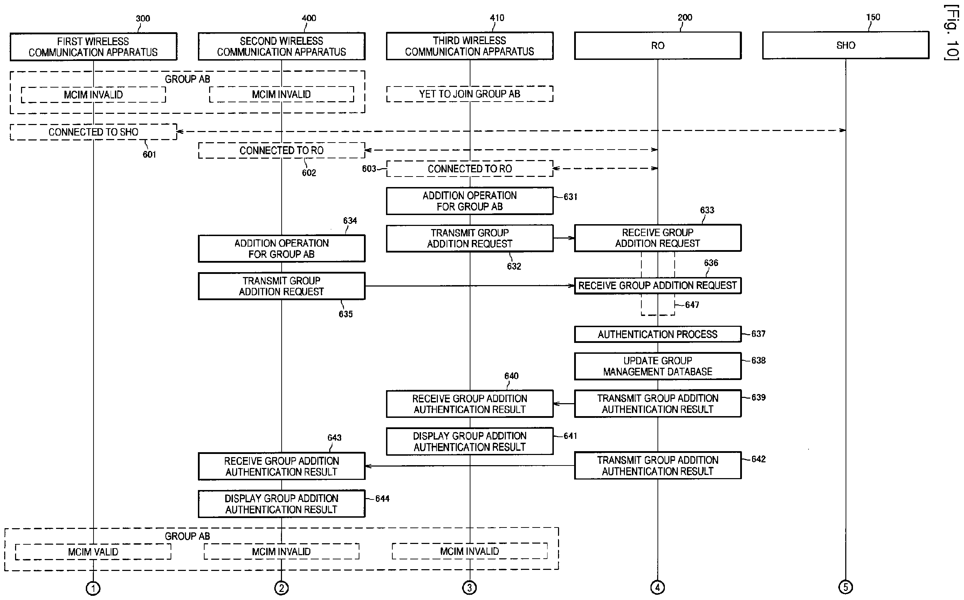

Fig. 10 is a sequence chart showing an example of a communication process between the various apparatuses that compose the communication system 100 according to the first exemplary embodiment. Note that since the sequence chart shown in Fig. 10 is a modification of Figs. 8 and 9, parts that are the same as Figs. 8 and 9 have been assigned the same reference numerals and the description thereof is partially omitted. Also, Fig. 10 shows an example of a communication process for a case where the third wireless communication apparatus 410 is additionally registered in the group AB by operating two devices (the second wireless communication apparatus 400 and the third wireless communication apparatus 410) that do not store a valid MCIM. Here, the two devices that do not store a valid MCIM are capable of connecting to the RO 200 with only a limited connection based on the PCIDs. For this reason, in the example shown in Fig. 10, the group addition requests are directly transmitted from the respective devices to the RO 200 and the group addition authentication result is directly transmitted from the RO 200 to the respective devices.

The processes (631 to 633) shown in Fig. 10 correspond to the processes (604 to 606) shown in Fig. 8. Similarly, the processes (634 to 636) shown in Fig. 10 correspond to the processes (607 to 611) shown in Fig. 8. However, the example in Fig. 10 differs in that the addition operation for the group AB is carried out at the second wireless communication apparatus 400 and the group addition request is directly transmitted from the second wireless communication apparatus 400 to the RO 200. The acceptance period (the range shown by the dotted line 647) shown in Fig. 10 corresponds to the acceptance period (the range shown by the dotted line 625) shown in Fig. 8.

The processes (637 to 641) shown in Fig. 10 correspond to the processes (612 to 616) shown in Fig. 8. The processes (642 to 644) shown in Fig. 10 correspond to the processes (617 to 621) shown in Fig. 9. However, the example in Fig. 10 differs in that the group addition authentication result is transmitted directly from the RO 200 to the second wireless communication apparatus 400 (642 and 643) without passing via the SHO 150.

In this way, according to the first exemplary embodiment, as one example the contact authentication information (MCIM) of the public network 110 can be easily shared by a plurality of devices in a group. In such case, when a new device is additionally registered in a group, it is possible to reliably add the device while maintaining security. However, additional registration of a device to be added is performed by carrying out authentication using the ID and password of the group and with the condition that specified operations are carried out within a set time using both a device registered in the group and the device to be added. By doing so, it is possible to increase security and reliably add a device. For example, by carrying out specified operations in a set time using the first wireless communication apparatus 300 and the third wireless communication apparatus 410, it is possible to add the third wireless communication apparatus 410 to the group AB. By doing so, even in a case where the ID and/or password of the group AB has been lost or the ID and/or password has leaked out to a third party, it will still be possible to prevent unexpected additions to the group AB by a third party. That is, according to the first exemplary embodiment, it is possible to easily share the right to connect to a network between a plurality of wireless communication apparatuses. In such case, it is possible to maintain security over the sharing.

### j. Example Operation of Communication System

Next, the operation of the communication system 100 according to the first exemplary embodiment will be described with reference to the drawings.

### k. Example Operation of Wireless Communication Apparatus

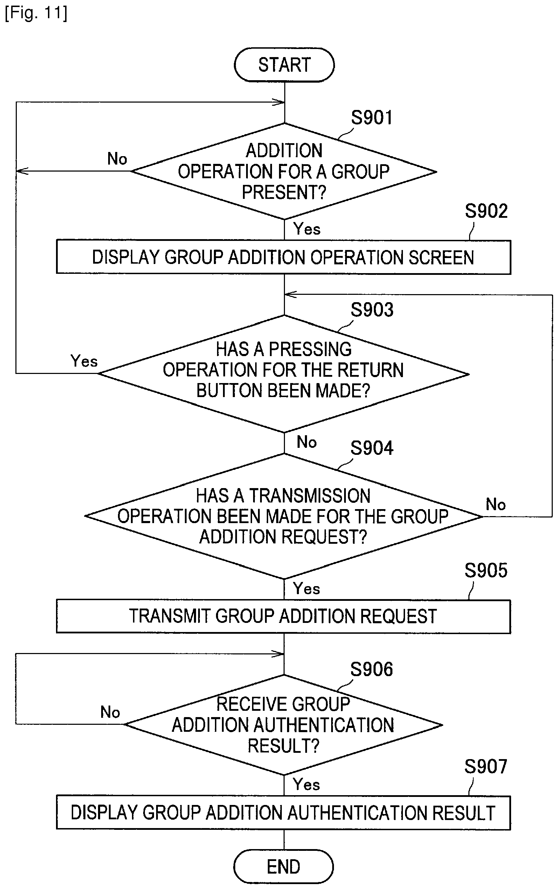

Fig. 11 is a flowchart showing one example of the processing procedure of the communication process carried out by the first wireless communication apparatus 300 according to the first exemplary embodiment. In Fig. 11, the case where the first wireless communication apparatus 300 makes a group addition request will be described as one example. Note that although only the example operation of the first wireless communication apparatus 300 is shown in Fig. 11, it is also possible to apply such operation to other wireless communication apparatuses.

First, the control unit 330 judges whether an addition operation for a group sharing an MCIM has been carried out (step S901) and when such addition operation has not been carried out, such monitoring is continued. When such addition operation has been carried out (step S901), the control unit 330 displays a display screen (for example, the addition operation screen 500 shown in Fig. 6) for carrying out an addition operation for the group sharing the MCIM on the display unit 370 (step S902).

Next, the control unit 330 determines whether a pressing operation has been carried out for the return button in such display screen (for example, a pressing operation for the return button 506 in the addition operation screen 500 shown in Fig. 6) (step S903). If such button operation has been carried out (step S903), the processing returns to step S901.

When such pressing operation has not been carried out (step S903), the control unit 330 determines whether a transmission operation for a group addition request has been carried out in the display screen (step S904). This transmission operation is for example a pressing operation of the confirm button 505 after operating the items in the addition operation screen 500 shown in Fig. 6. When such transmission operation has not been carried out (step S904), the processing returns to step S903.

When a transmission operation for a group addition request (i.e., an addition operation) has been carried out (step S904), the control unit 330 transmits a group addition request corresponding to the addition operation to the RO 200 (step S905). In this case, if the first wireless communication apparatus 300 is storing a valid MCIM, the group addition request is transmitted from the first wireless communication apparatus 300 via the SHO 150 to the RO 200. Meanwhile, if the first wireless communication apparatus 300 is not storing a valid MCIM, the group addition request is directly transmitted from the first wireless communication apparatus 300 to the RO 200.

Next, it is determined whether a group addition authentication result has been received (step S906) and when the group addition authentication result has not been received, such monitoring is continued. Meanwhile, if a group addition authentication result has been received (step S906), the control unit 330 displays the group addition authentication result on the display unit 370 (step S907). Here, when a group addition authentication result showing that authentication succeeded for group addition has been received (step S906), the control unit 330 displays a message showing that authentication succeeded on the display unit 370 (for example, the display screen 510 shown in Fig. 7(a)). Meanwhile, when a group addition authentication result showing that authentication for the group addition failed has been received (step S906), the control unit 330 displays a message showing that authentication failed on the display unit 370 (for example, the display screen 515 shown in Fig. 7(b)).

### 1. Example Operation of Information Processing Apparatus (RO)

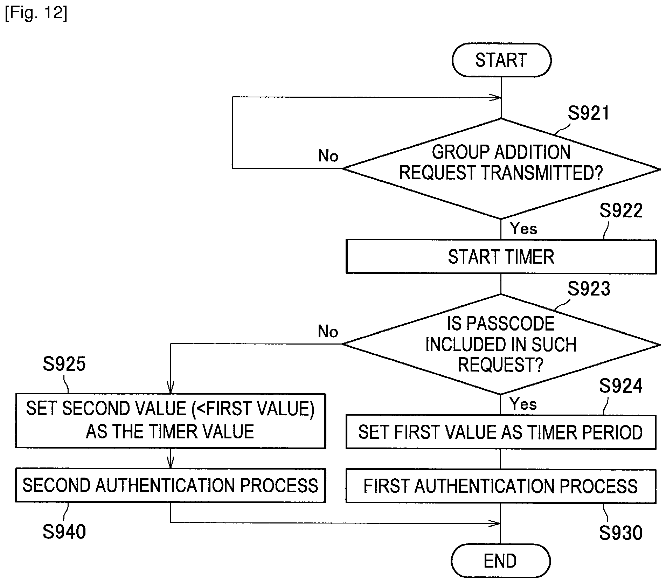

Fig. 12 is a flowchart showing one example of the processing procedure of the communication process carried out by the information processing apparatus 200 according to the first exemplary embodiment.

First, the control unit 210 judges whether a group addition request has been received (step S921) and when a group addition request has not been received, such monitoring is continued. Meanwhile, when a group addition request has been received (step S921), a timer for determining whether the acceptance period has elapsed is started (step S922).

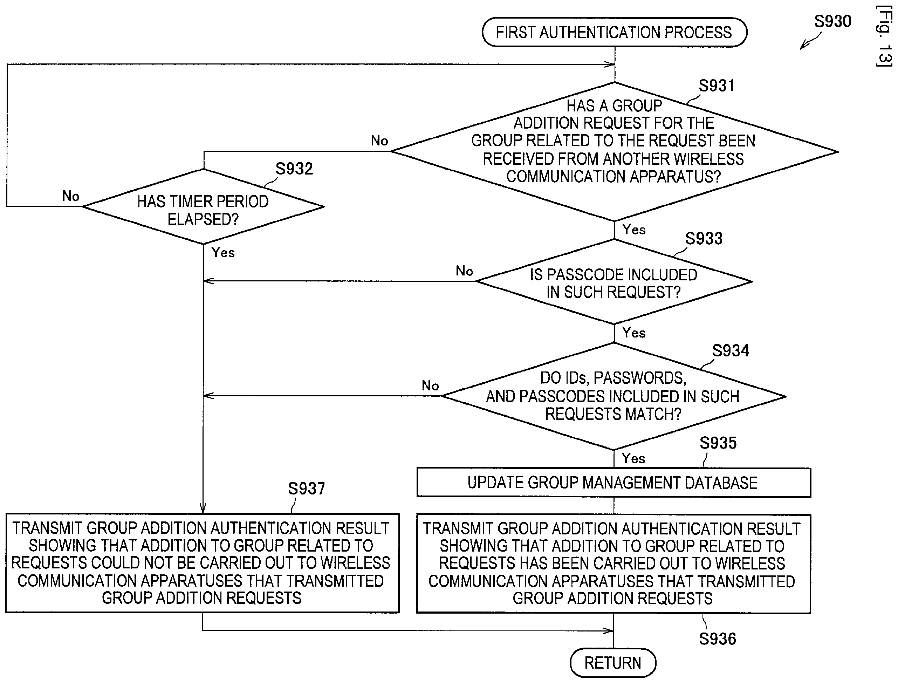

Next, it is determined whether a passcode is included in the received group addition request (step S923) and when a passcode is included in the received group addition request, the control unit 210 sets the first value as the timer period (acceptance period) (step S923). Next, a first authentication process is carried out (step S930). The first authentication process will be described in detail with reference to Fig. 13.

Meanwhile, when a passcode is not included in the received group addition request (step S923), the control unit 210 sets the second value as the timer period (acceptance period) (step S925). As described earlier, it is assumed that the second value is smaller than the first value.

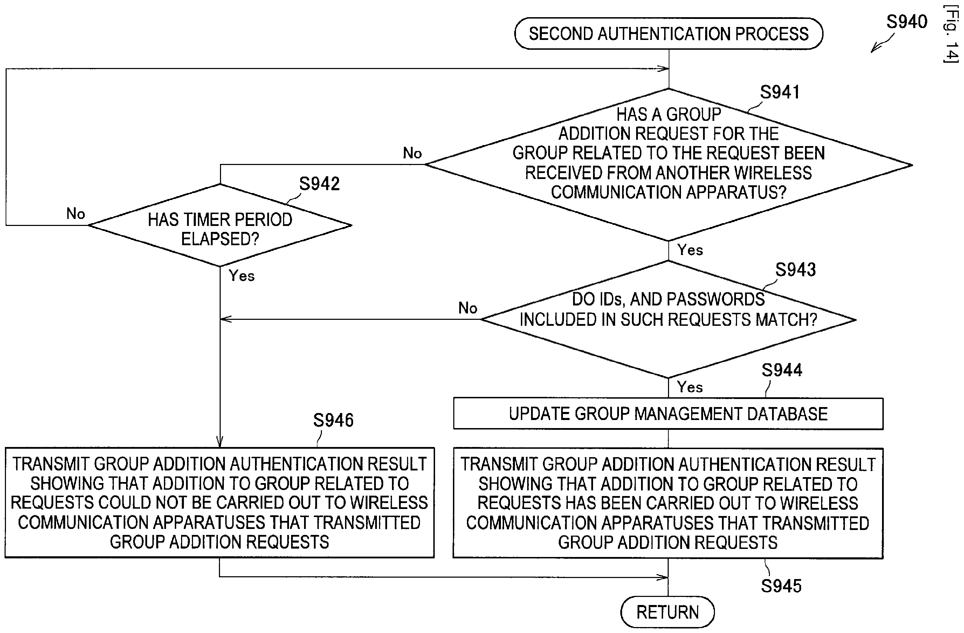

Next, a second authentication process is carried out (step S940). The second authentication process will be described in detail with reference to Fig. 14.

Fig. 13 is a flowchart showing the first authentication process procedure (the processing procedure in step S930 shown in Fig. 12) out of the processing procedure in the communication process carried out by the information processing apparatus 200 according to the first exemplary embodiment.

First, the control unit 210 determines whether a group addition request for a group to which a received group addition request relates has been received from another wireless communication apparatus (step S931). When a group addition request for such group has not been received from another wireless communication apparatus (step S931), the control unit 210 determines whether the timer period (acceptance period) from the reception of the first group addition request has elapsed (step S932).

If the timer period (acceptance period) has not elapsed from transmission of the first group addition request (step S932), the processing returns to step S931. Meanwhile, if the timer period (acceptance period) has elapsed from the transmission of the first group addition request (step S932), the processing proceeds to step S937. That is, the control unit 210 transmits a group addition authentication result showing that addition to the group related to the group addition request is not possible to the respective wireless communication apparatuses that transmitted the group addition requests (step S937). In such case, if the wireless communication apparatus to which the group addition authentication result is to be transmitted stores a valid MCIM, the group addition authentication result is transmitted from the RO 200 via the SHO 150. Meanwhile, if the wireless communication apparatus to which the group addition authentication result is to be transmitted does not store a valid MCIM, the group addition authentication result is directly transmitted from the RO 200. This also applies to the transmission in step S936.

If a group addition request relating to the group has been received from another wireless communication apparatus (step S931), the control unit 210 determines whether a passcode is included in the newly received group addition request (step S933). If a passcode is included in the newly received group addition request (step S933), the control unit 210 compares the received group addition requests with the content of the group management database 220 (step S934).

More specifically, the ID and password of the group respectively included in the received group addition requests and the ID and password of the group stored in the group management database 220 are compared and it is determined whether such IDs and passwords match (step S934). Note that the expression "received group addition requests" here refers to the group addition request received first and the next group addition request to be received. When a group whose ID and password match is present, it is determined whether the passcodes included in the respective group addition requests that have been received match (step S934).

When the IDs and passwords of the group and the passcodes included in the respective group addition requests all match (step S934), the control unit 210 updates the content of the group management database 220 (step S935). Next, the control unit 210 transmits a group addition authentication result showing that addition was carried out to the respective wireless communication apparatuses that transmitted the group addition requests (step S936). Note that step S933 and S934 are examples of the "determining" referred to in the patent claims. Also, step S935 is one example of the "additionally registering" referred to in the patent claims.

Also, if a passcode is not included in the group addition request that has been newly received (step S933), or if at least one of the IDs and passwords of the group and the passcodes included in the group addition requests do not match (step S934), the processing proceeds to step S937. In addition, since a mismatch has occurred in the authentication process, the control unit 210 transmits a group addition authentication result showing that addition to the group related to the group addition requests is not possible to the respective wireless communication apparatuses that transmitted the group addition requests (step S937).

Fig. 14 is a flowchart showing a second authentication process procedure (the processing procedure of step S940 shown in Fig. 12) out of the processing procedure of the communication process of the information processing apparatus 200 according to the first exemplary embodiment.

First, the control unit 210 determines whether a group addition request related to the group to which a received group addition request relates has been received from another wireless communication apparatus (step S941). If a group addition request related to the group has not been received from another wireless communication apparatus (step S941), the control unit 210 determines whether the timer period (acceptance period) from the transmission of the first group addition request has elapsed (step S942).

If the timer period (acceptance period) has not elapsed from transmission of the first group addition request (step S942), the processing returns to step S941. Meanwhile, when the timer period (acceptance period) has elapsed from the transmission of the first group addition request (step S942), the processing proceeds to step S946. That is, the control unit 210 transmits a group addition authentication result showing that addition to the group related to the group addition request is not possible to the respective wireless communication apparatuses that transmitted the group addition requests (step S946). In such case, if the wireless communication apparatus to which the group addition authentication result is to be transmitted stores a valid MCIM, the group addition authentication result is transmitted from the RO 200 via the SHO 150. Meanwhile, if the wireless communication apparatus to which the group addition authentication result is to be transmitted does not store a valid MCIM, the group addition authentication result is directly transmitted from the RO 200. This also applies to the transmission in step S945.

If a group addition request relating to the group has been received from another wireless communication apparatus (step S941), the control unit 210 compares the received group addition requests with the content of the group management database 220 (step S943).

More specifically, the ID and password of the group respectively included in the received group addition requests and the ID and password of the group stored in the group management database 220 are compared and it is determined whether such IDs and passwords match (step S943). Note that the expression "received group addition requests" here refers to the group addition request received first and the next group addition request to be received.

When the IDs and passwords of the group included in the respective group addition requests match (step S943), the control unit 210 updates the content of the group management database 220 (step S944). Next, the control unit 210 transmits a group addition authentication result showing that addition was carried out to the respective wireless communication apparatuses that transmitted the group addition requests (step S945). Note that step S943 is one example of the "determining" referred to in the patent claims. Also, step S944 is one example of the "additionally registering" referred to in the patent claims.

Also, if at least one of the IDs and passwords of the group included in the group addition requests do not match (step S943), the processing proceeds to step S946.

Note that in the first exemplary embodiment, an example has been described where security is increased by carrying out authentication using a passcode and/or by reducing the timer period (acceptance period) instead of simply using the ID and password of the group. However, as one example, it is also possible to increase security using location information relating to the respective wireless communication apparatuses. For example, the authentication process may be carried out on condition that the two wireless communication apparatuses that transmitted the group addition requests are within a specified range (for example, a circle with a radius of 1 to 5km). In such case, it is possible to include location information acquired by the location information acquiring unit 380 in the group addition request and to specify the locations of the wireless communication apparatuses based on such location information. That is, the information processing apparatus 200 is capable of specifying the locations of respective wireless communication apparatuses based on the location information included in the group addition requests received from the two wireless communication apparatuses. The information processing apparatus 200 is also capable of acquiring the IDs or location information (longitude and latitude) of the base stations to which the respective wireless communication apparatuses are connected and specifying the position of each wireless communication apparatus based on such information. As another example, it is also possible to carry out the authentication process with the condition that the two wireless communication apparatuses that transmitted the group addition requests are connected to the same base station (or base stations that are close (for example, one to five km apart)). It is also possible for example to change the timer period (acceptance period) in accordance with the distance between the two wireless communication apparatuses that transmitted the group addition requests. As one example, it is possible to change the timer period (acceptance period) so as to become shorter the greater the distance between the two wireless communication apparatuses.

That is, the control unit 210 is capable of carrying out the authentication process on condition that the two wireless communication apparatuses are present within a specified range at the time of transmission of the group addition requests. Based on such result, it is possible to additionally register the wireless communication apparatus to be added in a group.

### 2. Second Embodiment

In the first exemplary embodiment, an example is described where additional registration in a group is carried out by inputting items such as an ID and password of the group according to a manual operation by the user. However, a case can be imagined where the user operates the device to be registered and the device that makes the group addition request for carrying out such registration at substantially the same time. In such a case, since it may be necessary to input the same information into two devices, it would be preferable to facilitate such input operations while maintaining security. As one example, it would be conceivable to carry out such input operations automatically using near field communication, contactless communication, or the like. For this reason, in the second exemplary embodiment, an example is described where the input operation for the ID, password, and the like of a group is carried out automatically using contactless communication. Note that the configuration of the communication system according to the second exemplary embodiment is substantially the same as the example shown in drawings such as Fig. 3. For this reason, parts that are the same as in the first exemplary embodiment have been assigned the same reference numerals and the description thereof is partially omitted.

### a. Example Configuration of Wireless Communication Apparatus

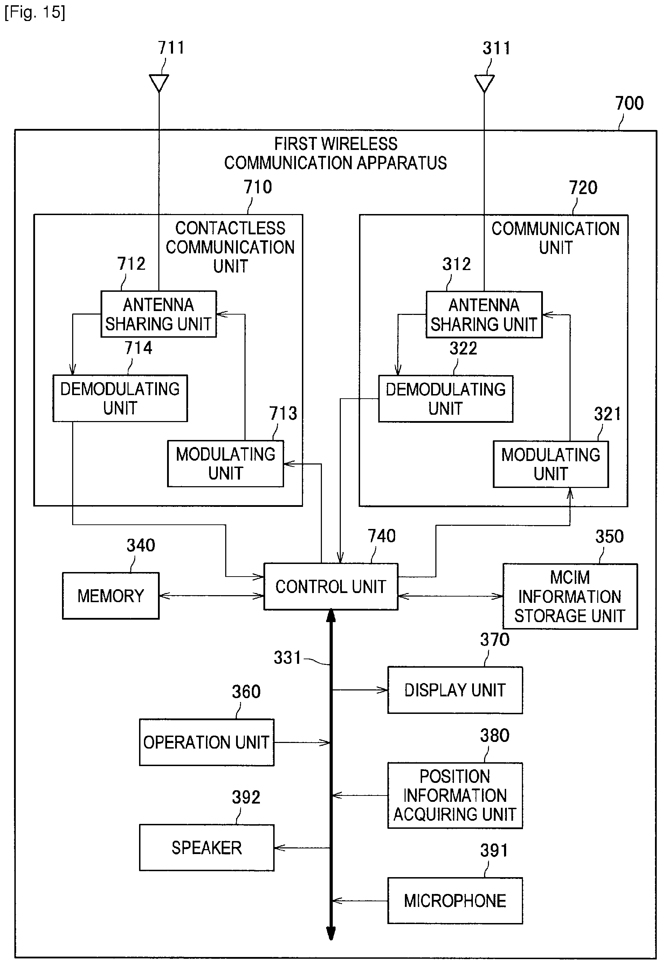

Fig. 15 is a block diagram showing one example of the functional configuration of a first wireless communication apparatus 700 according to the second exemplary embodiment. Note that the first wireless communication apparatus 700 is a modification of the first wireless communication apparatus 300 shown in Fig. 5. For this reason, parts that are the same as in the first wireless communication apparatus 300 have been assigned the same reference numerals and the description thereof is partially omitted.

The first wireless communication apparatus 700 includes a contactless communication unit 710, a communication unit 720, and a control unit 740. Note that the communication unit 720 corresponds to the antenna 311, the antenna sharing unit 312, the modulating unit 321, and the demodulating unit 322 shown in Fig. 5.

Based on control by the control unit 740, the contactless communication unit 710 carries out communication (contactless communication) according to a contactless communication method with another appliance (an appliance equipped with a contactless communication unit, not shown) and/or a reader/writer apparatus (not shown). As one example, the contactless communication unit 710 is a contactless communication unit equipped with an IC card function and is capable of carrying out transmission and reception of data in a contactless manner with an appliance or a reader/writer apparatus when placed within a distance of several centimeters of the appliance or reader/writer apparatus.

The contactless communication unit 710 includes an antenna 711, an antenna sharing unit 712, a modulating unit 713, and a demodulating unit 714. Note that although a different communication method is used, the functions of the antenna 711, the antenna sharing unit 712, the modulating unit 713, and the demodulating unit 714 correspond to the antenna 311, the antenna sharing unit 312, the modulating unit 321, and the demodulating unit 322 shown in Fig. 5. For this reason, detailed description of such functions is omitted here.

### b. Example Display of Contactless Communication Operation Screen

Figs. 16(a) and (b) are diagrams showing an example of a contactless communication operation screen displayed on the display unit 370 of the first wireless communication apparatus 700 according to the second exemplary embodiment and the state of the wireless communication apparatuses when contactless communication is carried out.

The contactless communication operation screen 530 shown in Fig. 16(a) is a display screen for carrying out a transmission operation for transmitting the ID and password of the group AB from the first wireless communication apparatus 700 to a third wireless communication apparatus 760 according to contactless communication.

The contactless communication operation screen 530 is provided with a group ID and password display region 531, a transmit button 532, and a return button 533.

The group ID and password display region 531 is a region showing the ID and password of a group (the group AB) to which the first wireless communication apparatus 700 belongs.

The transmit button 532 is a button which is pressed when transmitting the group ID and password displayed in the group ID and password display region 531 to another wireless communication apparatus.

Fig. 16(b) schematically shows the states of the respective wireless communication apparatuses when the ID and password of the group AB are transmitted by contactless communication from the first wireless communication apparatus 700 to the third wireless communication apparatus 760.

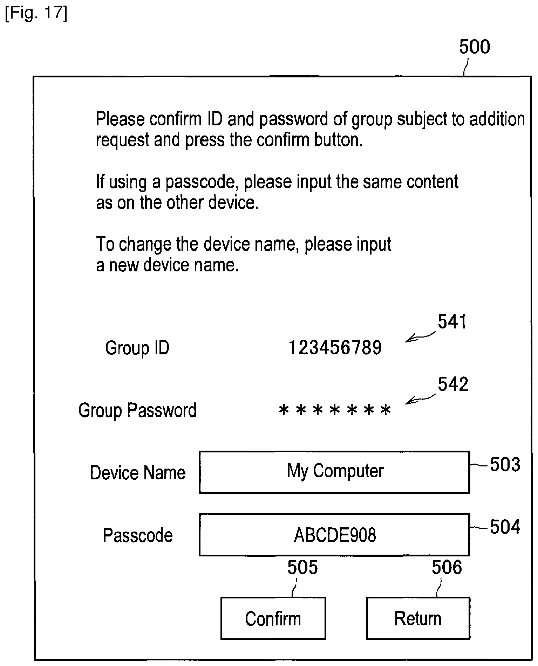

As one example, the user 20 places the first wireless communication apparatus 700 near the third wireless communication apparatus 760 so that the respective contactless communication units 710 of the first wireless communication apparatus 700 and the third wireless communication apparatus 760 are close (for example, so that the distance between the devices is several centimeters or less) or are touching. In this state, the user 20 carries out a pressing operation of the transmit button 532 in the contactless communication operation screen 530 displayed on the first wireless communication apparatus 700. Due to this pressing operation, the ID and password of the group AB are transmitted by contactless communication from the first wireless communication apparatus 700 to the third wireless communication apparatus 760. When this transmission process has been completed, a message showing this is displayed on the respective display units 370 of the first wireless communication apparatus 700 and the third wireless communication apparatus 760 and an addition operation screen is displayed. An example display of this addition operation screen is shown in Fig. 17.

### c. Example Display of Addition Operation Screen

Fig. 17 is a diagram showing an example of the addition operation screen displayed on the display unit 370 of the third wireless communication apparatus 760 according to the second exemplary embodiment.

The addition operation screen 540 shown in Fig. 17 is a display screen that is a partial modification of the addition operation screen 500 shown in Fig. 6 and is a display screen for carrying out an addition operation that adds the third wireless communication apparatus 760 to the group AB. For this reason, parts that are the same as the addition operation screen 500 have been assigned the same names and description thereof is partially omitted.

The addition operation screen 540 includes a group ID display region 541, a group password display region 542, the device name display region 503, the passcode input region 504, the confirm button 505, and the return button 506.

The group ID display region 541 is a region displaying the ID of the group (the group AB) transmitted from the first wireless communication apparatus 700.

The group password display region 542 is a region displaying the password of the group (the group AB) transmitted from the first wireless communication apparatus 700.

Note that although only the addition operation screen 540 displayed on the third wireless communication apparatus 760 is shown in Fig. 17, the addition operation screen displayed on the first wireless communication apparatus 700 is substantially the same except that the device name of the first wireless communication apparatus 700 is displayed in the device name display region 503.

### d. Communication Example For Case Where Group Addition Registration is Carried Out Using Contactless Communication

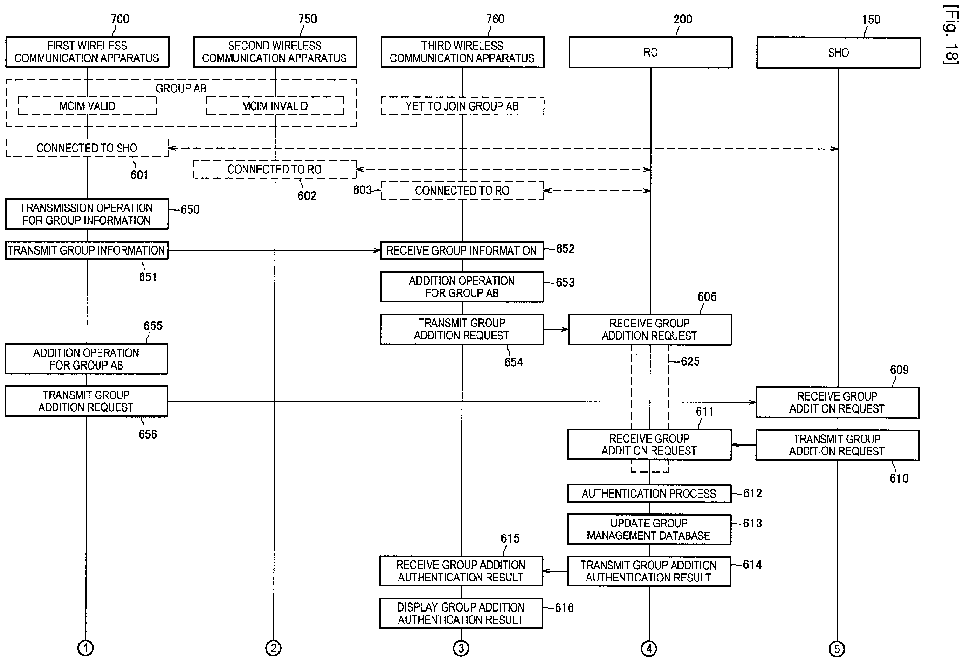

Fig. 18 is a sequence chart showing an example of the communication process carried out between the apparatuses that compose the communication system 100 according to the second exemplary embodiment.

Fig. 18 is a modification of the communication process shown in Figs. 8 and 9 and differs in that input of the ID and password of the group is omitted by transmitting the ID and password of the group by contactless communication. Aside from this, since the process is substantially the same as the communication process shown in Figs. 8 and 9, parts that are the same as the communication process shown in Figs. 8 and 9 have been assigned the same reference numerals and description thereof is partially omitted.

First, according to a user operation, a display screen for carrying out a transmission operation for transmitting group information (the group ID and password) relating to the group AB is displayed on the display unit 370 of the first wireless communication apparatus 700. As one example, the contactless communication operation screen 530 shown in Fig. 16(a) is displayed on the display unit 370 of the first wireless communication apparatus 700.

After this, in the contactless communication operation screen 530, the user confirms the ID and password of the group AB displayed in the group ID and password display region 531. Note that since the password is not displayed, as one example the user may confirm the number of characters. After such confirmation a transmission operation is carried out for the group information (650). That is, in the contactless communication operation screen 530, after the ID and password of the group AB have been confirmed, a pressing operation for the transmit button 532 (i.e., a transmission operation) is carried out (650).

In this way, when a transmission operation has been received for the group information by the first wireless communication apparatus 700 (650), the group information (the ID and password of the group AB) in the contactless communication operation screen 530 is transmitted (651, 652). That is, the group information is transmitted by contactless communication from the first wireless communication apparatus 700 to the third wireless communication apparatus 760 (651, 652). However, when the respective contactless communication units 710 of the first wireless communication apparatus 700 and the third wireless communication apparatus 760 are not close, it is not possible to transmit the group information by contactless communication. In such case where it is not possible to transmit the group information, as one example an error screen is displayed on the first wireless communication apparatus 700 and the third wireless communication apparatus 760 respectively to instruct the user to place the devices in a state where contactless communication is possible.

Next, a display screen for carrying out an addition operation for the group AB is displayed on the respective display units 370 of the first wireless communication apparatus 700 and the third wireless communication apparatus 760. As one example, the contactless communication operation screen 530 shown in Fig. 17 (except that "My Mobile" is displayed in the device name display region 503 and the passcode input region 504 is blank) is displayed on the display unit 370 of the first wireless communication apparatus 700. The contactless communication operation screen 540 shown in Fig. 17 (except that the passcode input region 504 is blank) is displayed on the display unit 370 of the third wireless communication apparatus 760.

In this way, group information stored in the memory 340 is displayed by the first wireless communication apparatus 700 and group information transmitted from the first wireless communication apparatus 700 is displayed by the third wireless communication apparatus 760. This means that the user only needs to input a passcode as necessary (653, 655). After such input operations have been carried out, the confirm button 505 is pressed (654, 656). When an addition operation for the group AB has been accepted in this way (654, 656), a group addition request corresponding to the addition operation is transmitted to the RO 200 (654 and 606, 656 and 609).

Note that since the communication process is thereafter the same as in Figs. 8 and 9, further description thereof is omitted.

In this way, according to the second exemplary embodiment, the ID and password of the group are transmitted by contactless communication from a device that has already been registered to a device that is to be added. By doing so, it is possible to omit an input operation for the group ID and password when carrying out operations for a group addition request. In such case, since contactless communication of the group ID and password is carried out based on a transmission operation by the user, it is possible to prevent the group ID and password from leaking to another appliance. That is, according to the second exemplary embodiment, it is possible to easily share the rights for connecting to a network between a plurality of wireless communication apparatuses. In this case, it is possible to maintain security for such sharing.

### 3. Third Embodiment

In the first and second embodiments according to the present disclosure, examples are described where additional registration is carried out by transmitting group addition requests from two devices. However, as another example it would also be conceivably possible to maintain a certain level of security by having the same user operate a device to be registered and a device that makes a group addition request in order to carry out such registration. For this reason, the third exemplary embodiment describes an example where information or the like relating to a device that is to be registered is transmitted to a device that has already been registered in a group using contactless communication and then a group addition request is made from only such registered device. Note that the configuration of the communication system according to the third exemplary embodiment is substantially the same as the examples shown in drawings such as Figs. 3 and 15. For this reason, parts that are the same as in the second exemplary embodiment have been assigned the same reference numerals and the description thereof is partially omitted.

### a. Example Display of Contactless Communication Operation Screen

Fig. 19 is a diagram showing an example of the contactless communication operation screen displayed on the display unit 370 of the third wireless communication apparatus 760 according to the third exemplary embodiment.

The contactless communication operation screen 560 shown in Fig. 19 is a display screen for carrying out a transmission operation that transmits information (for example, terminal identification information) relating to the third wireless communication apparatus 760 from the third wireless communication apparatus 760 to the first wireless communication apparatus 700 using contactless communication.

The contactless communication operation screen 560 is provided with a transmission information display region 561, a transmit button 562, and a return button 563.

The transmission information display region 561 is a region displaying information to be transmitted to the first wireless communication apparatus 700 out of the various information stored in the third wireless communication apparatus 760. Here, this third embodiment of the present disclosure describes an example where out of the various information stored in the third wireless communication apparatus 760, the device name and terminal identification information is the information to be transmitted.

The transmit button 562 is a button that is pressed when transmitting the various information displayed in the transmission information display region 561 to another wireless communication apparatus.

Note that the state of the respective wireless communication apparatuses when contactless communication is carried out between the third wireless communication apparatus 760 and the first wireless communication apparatus 700 is substantially the same as the state shown in Fig. 16(b) except that the device being operated is the third wireless communication apparatus 760.

### b. Example Display of Addition Operation Screen

Fig. 20 is a diagram showing one example of the addition operation screen displayed on the display unit 370 of the first wireless communication apparatus 700 according to the third exemplary embodiment.

The addition operation screen 570 shown in Fig. 20 is a display screen for carrying out an addition operation for adding the third wireless communication apparatus 760 to the group AB.

The addition operation screen 570 is provided with an added group display region 571, an added device display region 572, a confirm button 573, and a return button 574.

The added group display region 571 is a region displaying the name of the group to which the first wireless communication apparatus 700 belongs.

The added device display region 572 is a region displaying information transmitted from the third wireless communication apparatus 760. Note that part of the information transmitted from the third wireless communication apparatus 760 may be in a non-displayed state.

The confirm button 573 is a button which is pressed after confirming the various items described above to make a group addition request for the confirmed content. That is, when the confirm button 573 is pressed, a group addition request for adding the device displayed in the added device display region 572 to the group displayed in the group display region 571 is transmitted.

### c. Example of Communication when Carrying Out Group Additional Registration Using Contactless Communication

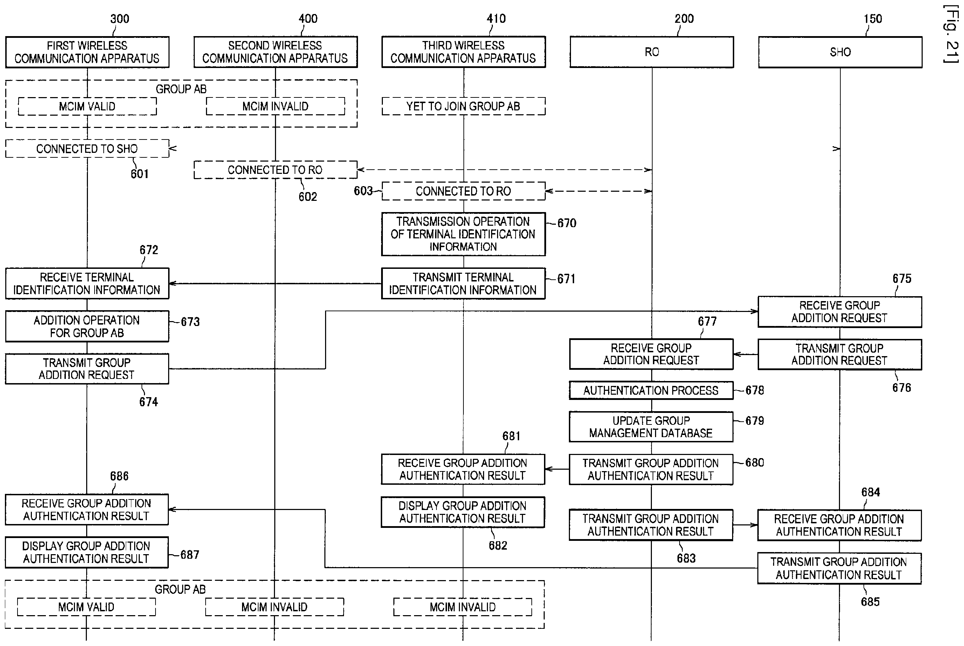

Fig. 21 is a sequence chart showing an example of the communication process carried out by the various apparatuses that compose the communication system 100 according to the third exemplary embodiment.

The example shown in Fig. 21 is a modification to the communication process shown in Fig. 18 and by transmitting information relating to the device to be added via contactless communication to another device, transmission of a group addition request from the device to be added is omitted. Also, in the example shown in Fig. 21, in the authentication process for a group addition request, authentication is carried out using only the group information included in the group addition request transmitted from one device. Note that aside from the above, the processing is substantially the same as in the communication process shown in Fig. 18 and therefore parts that are the same as in the communication process shown in Fig. 18 have been assigned the same reference numerals and the description thereof is partially omitted.

First, according to a user operation, a display screen for carrying out a transmission operation that transmits information relating to the third wireless communication apparatus 760 (as examples, the terminal identification information and/or device name) is displayed on the display unit 370 of the third wireless communication apparatus 760. As one example, the contactless communication operation screen 560 shown in Fig. 19 is displayed on the display unit 370 of the third wireless communication apparatus 760.

Next, the user confirms the information (as examples, the terminal identification information and/or device name) displayed in the transmission information display region 561 of the contactless communication operation screen 560. After such confirmation, a transmission operation for such information is carried out (670). That is, in the contactless communication operation screen 560, a pressing operation (transmission operation) for the confirm button 532 is carried out after confirming the information to be transmitted (670).

In this way, if a transmission operation has been received by the third wireless communication apparatus 760 (670), the information in the contactless communication operation screen 560 for such transmission operation (as examples, the terminal identification information and/or device name) is transmitted (671, 672). That is, the information is transmitted by contactless communication from the third wireless communication apparatus 760 to the first wireless communication apparatus 700. However, when the contactless communication units 710 of the first wireless communication apparatus 700 and the third wireless communication apparatus 760 are not close, it is not possible to transmit the information by contactless communication. In such case where it is not possible to transmit the information, as one example an error screen is displayed on the first wireless communication apparatus 700 and the third wireless communication apparatus 760 respectively to instruct the user to place the devices in a state where contactless communication is possible.

Next, a display screen for carrying out an addition operation for the group AB is displayed on the display unit 370 of the first wireless communication apparatus 700. For example, an addition operation screen 570 shown in Fig. 20 is displayed on the display unit 370 of the first wireless communication apparatus 700.

In this way, the information transmitted from the third wireless communication apparatus 760 is displayed by the first wireless communication apparatus 700. This means that the user does not need to input a group ID, password, or various information (as examples, the terminal identification information and/or device name) relating to the device to be added. After confirming such information, the confirm button 573 is pressed (673). In this way, when an addition operation for the group AB has been received (673), a group addition request corresponding to such addition operation is transmitted to the RO 200 (674 to 677). Here, in the example shown in Fig. 21, since only one wireless communication apparatus transmits a group addition request, there is no passcode to be compared. For this reason, a passcode is not included in the group addition request.

After this, an authentication process is carried out for the received group addition request (678). Here, in the example shown in Fig. 21, since there is only one wireless communication apparatus that transmits a group addition request, a determination of whether a timer period (acceptance period) has passed is not carried out. Also, since a passcode is not included in the received group addition request, a process determining whether a passcode is included is not carried out. Also, since only one group addition request is received, only a comparison of the content of the received group addition request with the content of the group management database 220 is carried out. If a group with a matching ID and password is present, the control unit 210 then updates the content of the group management database 220 (613).

The various processes (679 to 682) shown in Fig. 21 correspond to the various processes (613 to 616) shown in Fig. 8. Similarly, the various processes (683 to 687) shown in Fig. 21 correspond to the various processes (617 to 621) shown in Fig. 9. However, the processing differs in that when a group addition authentication result is transmitted from the RO 200 to the third wireless communication apparatus 760 (680, 681), the terminal identification information of the third wireless communication apparatus 760 included in the group addition request transmitted from the first wireless communication apparatus 700 is used.

In this way, the control unit 210 is capable of additionally registering the third wireless communication apparatus 760 in the group AB using the wireless communication apparatus information (the terminal identification information or the like of the third wireless communication apparatus 760) included in the group addition request.

In this way, according to the third exemplary embodiment, information (wireless communication apparatus information) relating to the device to be added is transmitted from the device to be added to a device that has already been registered. Since this makes it possible for the registered device to acquire the wireless communication apparatus information, it is possible to carry out an addition operation for the group using only the registered device. In such case, since the wireless communication apparatus information is transmitted by contactless communication based on a transmission operation made by the user, it is possible to prevent the wireless communication apparatus from leaking to another appliance. That is, according to the third exemplary embodiment, it is possible to easily share the right to connect to a network between a plurality of wireless communication apparatuses. In such case, it is possible to maintain security for the sharing.

Note that the second and third exemplary embodiments describe examples where contactless communication units are provided in the wireless communication apparatuses and information (as examples, the ID and password of a group) is exchanged between the wireless communication apparatuses using the contactless communication units. However, it is also possible for the wireless communication apparatuses to be provided with near field communication units and for the information to be exchanged between the wireless communication apparatuses using the near field communication units. The near field communication units are capable of communicating with other devices (appliances equipped with near field communication units using the same method) present within a range of several meters to several tens of meters and are realized as one example using Bluetooth. It is also possible for the wireless communication apparatuses to be provided with infrared communication units and for the information to be exchanged between the wireless communication apparatuses using the infrared communication units. It is also possible to exchange information between the wireless communication apparatuses by carrying out wired communication using an interface such as a cable.

### 4. Modifications

In the first to third embodiments of the present disclosure, examples are described where a group addition operation is carried out using wireless communication apparatuses equipped with display units. Here, when carrying out additional registration in a group on a wireless communication apparatus equipped with a user interface (display unit) with comparatively high display performance, it is possible to display the respective display screens on such display unit and to carry out the addition operation for the group using such display screens. However, a case can also be imagined where additional registration in a group is carried out using a wireless communication apparatus equipped with only a user interface of limited display performance and it is not possible to display the respective display screens. For this reason, as a modification, an example is described where an addition operation for a group is carried out using a wireless communication apparatus equipped with only a user interface of limited display performance.

### a. Example of a Wireless Communication Apparatus Equipped With a User Interface Aside From a Display Unit

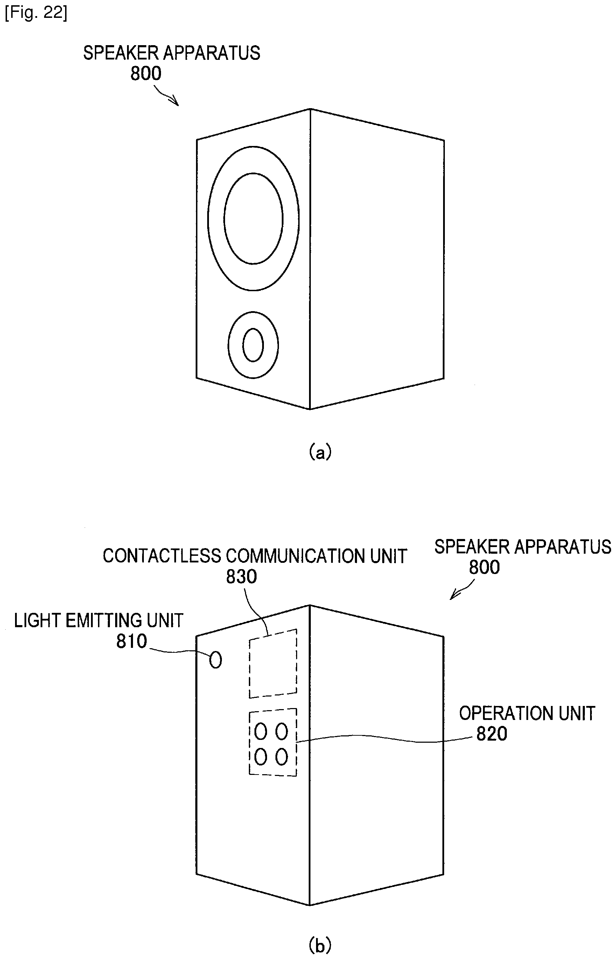

Figs. 22(a) and 22(b) are perspective views showing an example of the external construction of a speaker apparatus 800 according to a modification to the embodiments of the present disclosure. That is, in Fig. 22, the speaker apparatus 800 is shown as one example of a wireless communication apparatus equipped with only a user interface of limited display performance. Also, in Fig. 22, in the speaker apparatus 800 equipped with only a user interface of limited display performance, one example of operation elements used when carrying out an addition operation for a group (i.e., a light emitting unit 810 and an operation unit 820) are shown.

Fig. 22(a) is a perspective view from the front side of the speaker apparatus 800 and Fig. 22(b) is a perspective view from the rear side of the speaker apparatus 800. Also, the speaker apparatus 800 includes the light emitting unit 810, the operation unit 820, and a contactless communication unit 830. The internal configuration relating to communication in the speaker apparatus 800 is assumed to be substantially the same as in the first wireless communication apparatus 700 shown in Fig. 15. As one example, the light emitting unit 810 corresponds to the display unit 370, the operation unit 820 corresponds to the operation unit 360, and the contactless communication unit 830 corresponds to the contactless communication unit 710.

The light emitting unit 810 is a light emitting unit provided on an exterior surface of the speaker apparatus 800 and is constructed of a LED, for example. The light emitting unit 810 is lit up and extinguished based on a control signal from the control unit 740.

The operation unit 820 is constructed of one or a plurality of operation elements provided on the exterior surface of the speaker apparatus 800.

For example, when additionally registering the speaker apparatus 800 in the group AB, it is possible to apply the third exemplary embodiment. As one example, by carrying out a specified operation of the operation elements (for example pressing a confirm button five times consecutively), the user transmits various information relating to the speaker apparatus 800 via the contactless communication unit 830 to the first wireless communication apparatus 700 (670 to 672 shown in Fig. 21). After this transmission operation, the user carries out an addition operation for additionally registering the speaker apparatus 800 in the group AB using the first wireless communication apparatus 700 (673 in Fig. 21).

Also, as one example, when the group addition authentication result is received by the speaker apparatus 800 (681 shown in Fig. 21), by having the light emitting unit 810 carry out a specified flashing operation (for example, flashing five times with a fixed interval), it is possible to notify the user of the authentication result (682 shown in Fig. 21). As another example, it is also possible to use a plurality of LEDs as the light emitting unit 810 and to notify the user that a group addition authentication result has been received by way of a lighting pattern that uses a combination of such LEDs.

As another example, a case where the speaker apparatus 800 belongs to the group AB is also imagined. In such case, when additionally registering another wireless communication apparatus (for example, the third wireless communication apparatus 760) using the speaker apparatus 800, it is possible to apply the second exemplary embodiment. For example, by having the user carry out a specified operation of the operation elements (for example pressing a confirm button three times consecutively), the speaker apparatus 800 transmits group information relating to the group AB via the contactless communication unit 830 to the third wireless communication apparatus 760 (650 to 652 shown in Fig. 21). After this transmission operation, the user carries out an addition operation for additionally registering the third wireless communication apparatus 760 in the group AB using the speaker apparatus 800 and the third wireless communication apparatus 760 (653, 655 in Fig. 18). Note that this addition operation (655 shown in Fig. 18) for the group AB at the speaker apparatus 800 is realized by the user carrying out a specified operation of the operation elements (for example pressing a decide button three times consecutively while pressing a specified button).

In this way, according to the embodiments of the present disclosure, it is possible for a device with a simple UI (user interface) to carry out a registration operation for a group. This means that it is possible to carry out a registration operation for a group using various types of wireless communication apparatus.

Note that in the embodiments of the present disclosure, examples where the information processing apparatus 200 is constructed of a single device have been described. However, it is also possible to apply the embodiments of the present disclosure to an information processing system where the various components of the information processing apparatuses (for example, the control unit 210 and the group management database 220) are configured using a plurality of apparatuses. Also, although examples where the group AB is composed of two or three wireless communication apparatuses have been described in the embodiments of the present disclosure, it is also possible to apply the embodiments of the present disclosure to a group composed of four or more wireless communication apparatuses. It is also possible to apply the embodiments of the present disclosure to mobile wireless communication apparatuses (for example a dedicated data communication terminal apparatus) or fixed-type wireless communication apparatuses (for example, a wireless communication apparatus for data collection at a vending machine).

Examples where use rights over an MCIM are used as network connection rights are described above in the embodiments of the present disclosure. However, it is also possible to apply the embodiments of the present disclosure to other network connection rights for connecting to a specified network based on other information (for example, a USIM (Universal Subscriber Identity Module)).

Note that the embodiments given above describe examples used to embody the present disclosure and that elements in the embodiments correspond to elements in the patent claims. In the same way, elements in the patent claims correspond to elements in the embodiments of the present disclosure that have been given the same names. However, it should be understood by those skilled in the art that various modifications, combinations, sub-combinations and alterations may occur depending on design requirements and other factors insofar as they are within the scope of the appended claims or the equivalents thereof.

The processing procedures described in the embodiments given above may take the form of a method including a series of such procedures and may also take the form of a program for causing a computer to execute a series of such procedures or a recording medium storing such a program. As examples, it is possible to use a CD (Compact Disc), an MD (MiniDisc), a DVD (Digital Versatile Disc), a memory card, a Blu-ray Disc (registered trademark) or the like as the recording medium.

Additionally, the present technology may also be configured as below.
(1) An information processing apparatus, comprising:
   a receiving unit configured to receive, from a first communications device, a first request to join a group of second communications devices, the first request comprising first information identifying the group, and the group being associated with at least one connection right; and
   a control unit configured to associate the first communications device with the group, based at least the received information.
(2) The apparatus of (1), wherein the group is associated with a plurality of connection rights.
(3) The apparatus of (1) or (2), wherein the first group information comprises at least one of an identifier of the group and a password associated with the group identifier.
(4) The apparatus of any one of (1) to (3), wherein the control unit is further configured to: determine whether the first request comprises information associated with a first user of the first communications device; and
   establish a first time period for associating the first communications device with the group, when the first request includes the first user information.
(5) The apparatus of (4), wherein the first user information comprises a numerical passcode specified by the first user.
(6) The apparatus of (4) or (5), wherein:
   the receiving unit is further configured to receive, from a corresponding one of the second communications devices, a second request to add the first communications device to the group; and
   the control unit is further configured to determine whether the second request is received within the first time period.
(7) The apparatus of (6), wherein:
   the second request comprises information associated with a second user of the corresponding second communications device; and
   the control unit is further configured to determine whether the first user information matches the second user information, when the second request is received within the first time period.
(8) The apparatus of (7), wherein the second user information comprises a numerical passcode specified by the second user.
(9). The apparatus of (8), wherein the control unit is further configured to generate information indicative of a failure to associate the first communications device with the group, when the first user information does not match the second user information.
(10) The apparatus of any one of (7) to (9), wherein:
   the second request comprises second information identifying the group; and
   the control unit is further configured to determine whether at least a portion of the first group information matches a corresponding portion of the second group information, when the first user information matches the second user information.
(11) The apparatus of (10), wherein the control unit is further configured to associate the first communications device with the group, when the first group information matches the second group information.
(12) The apparatus of any one of (7) to (11), wherein the control unit is further configured to generate information indicative of a failure to associate the first communications device with the group, when the second request is not received within the first time period.
(13) The apparatus of any one of (6) to (12), wherein the control unit is further configured to:
   establish a second time period for associating the first communications device with the group, when the first request does not include the first user information, the first time period exceeding the second time period; and
   determine whether the second request is received within the second time period
(14) The apparatus of (13), wherein:
   the second request comprises second information identifying the group; and
   the control unit is further configured to determine whether at least a portion of the first group information matches a corresponding portion of the second group information, when the second request is received within the second time period.
(15) The apparatus of (14), wherein the control unit is further configured to associate the first communications device with the group, when the first group information portion matches the second group information portion.
(16) The apparatus of (10) or (11), wherein the control unit is further configured to generate information indicative of a failure to associate the first communications device with the group, when the first group information does not correspond to the second group information.
(17) The apparatus of any one of (1) to (16), wherein the control unit is further configured to:
   generate a confirmation indicative of the association between the first communications device and the group; and
   generate an instruction to transmit the confirmation to the first communications device and at least one of the second communications devices.
(18) The apparatus of (17), further comprising a communications unit configured to transmit the confirmation to the first communications device and at least one of the second communications devices, in response to the generated instructions.

### Reference Signs List

100 Communication system
110 Public network
120 Network control apparatus
121, 122, 206 Base station
123-126, 207 Wireless connection
200 Information processing apparatus (RO)
205, 720 Communication unit
210, 740 Control unit
220 Group management database
300, 700 First wireless communication apparatus
311, 711 Antenna
312, 712 Antenna sharing unit
321, 713 Modulating unit
322, 714 Demodulating unit
330 Control unit
331 Bus
340 Memory
350 MCIM information storage unit
360, 820 Operation unit
370 Display unit
380 Position information acquiring unit
391 Microphone
392 Speaker
400, 750 Second wireless communication apparatus
410, 760 Third wireless communication apparatus
710, 830 Contactless communication unit
800 Speaker apparatus
810 Light emitting unit

## Claims

1. An information processing apparatus (200), comprising:
a receiving unit (205) configured to receive, from a first communications device (410), a first request to join a group of second communications devices (161), the first request comprising first information identifying the group, and the group being associated with at least one connection right to connect to a specified network; and
a control unit (210) configured to associate the first communications device with the group, based on at least the received information;
wherein the control unit is further configured to:
determine whether the first request comprises information associated with a first user of the first communications device; and
establish a first time period for associating the first communications device with the group, when the first request includes the first user information, and otherwise to establish a second time period, less than the first time period, for associating the first communications device with the group.

2. The apparatus of claim 1, wherein the first user information comprises a passcode.

3. The apparatus of claim 1, wherein the group is associated with a plurality of connection rights.

4. The apparatus of claim 1, wherein the first group information comprises at least one of an identifier of the group and a password associated with the group identifier.

5. The apparatus of claim 1, wherein:
the receiving unit is further configured to receive, from a corresponding one (300, 400) of the second communications devices, a second request to add the first communications device to the group; and
the control unit is further configured to determine whether the second request is received within the first time period.

6. The apparatus of claim 5, wherein:
the second request comprises information associated with a second user of the corresponding second communications device; and
the control unit is further configured to determine whether the first user information matches the second user information, when the second request is received within the first time period.

7. The apparatus of claim 6, wherein:
the second request comprises second information identifying the group; and
the control unit is further configured to determine whether at least a portion of the first group information matches a corresponding portion of the second group information, when the first user information matches the second user information.

8. The apparatus of claim 7, wherein the control unit is further configured to associate the first communications device with the group, when the first group information matches the second group information.

9. The apparatus of claim 6, wherein the control unit is further configured to generate information indicative of a failure to associate the first communications device with the group, when the second request is not received within the first time period.

10. The apparatus of claim 5, wherein the control unit is further configured to:
establish a second time period for associating the first communications device with the group, when the first request does not include the first user information, the first time period exceeding the second time period; and
determine whether the second request is received within the second time period.

11. The apparatus of claim 10, wherein:
the second request comprises second information identifying the group; and
the control unit is further configured to determine whether at least a portion of the first group information matches a corresponding portion of the second group information, when the second request is received within the second time period.

12. The apparatus of claim 11, wherein the control unit is further configured to associate the first communications device with the group, when the first group information portion matches the second group information portion.

13. A computer-implemented method, comprising:
receiving (606), from a first communications device (410), a first request to join a group of second communications devices (161), the first request comprising first information identifying the group, and the group being associated with at least one connection right to connect to a specified network;
associating (613), using at least one processor, the first communications device with the group, based on at least the received information;
determining whether the first request comprises information associated with a first user of the first communications device; and
establishing a first time period for associating the first communications device with the group, when the first request includes the first user information and otherwise establishing a second time period, less than the first time period, for associating the first communications device with the group.

14. A communications system, comprising:
an information processing apparatus according to claim 1; and
a first communications device;
a group of second communications devices (161) being associated with at least one connection right to connect to a specified network;
wherein the first communications device is configured to generate an instruction to transmit the first request to join the group of second communication devices.

## Patentansprüche

1. Informationsverarbeitungsvorrichtung (200), die umfasst:
eine Empfangseinheit (205), die dazu ausgelegt ist, aus einem ersten Kommunikationsgerät (410) eine erste Anfrage, einer Gruppe von zweiten Kommunikationsgeräten (161) beizutreten, zu empfangen, wobei die erste Anfrage erste Informationen, die die Gruppe bezeichnen, umfasst, und die Gruppe wenigstens einem Verbindungsrecht zum Verbinden mit einem spezifizierten Netzwerk zugeordnet ist; und
eine Steuereinheit (210), die dazu ausgelegt ist, das erste Kommunikationsgerät auf der Basis zumindest der empfangenen Informationen zur Gruppe zuzuordnen;
wobei die Steuereinheit ferner ausgelegt ist zum:
Ermitteln, ob die erste Anfrage Informationen umfasst, die einem ersten Benutzer des ersten Kommunikationsgeräts zugeordnet sind; und
Festlegen einer ersten Zeitdauer zum Zuordnen des ersten Kommunikationsgeräts zur Gruppe, wenn die erste Anfrage die ersten Benutzerinformationen umfasst, und anderenfalls Festlegen einer zweiten Zeitdauer zum Zuordnen des ersten Kommunikationsgeräts zur Gruppe, die geringer ist als die erste Zeitdauer.

2. Vorrichtung nach Anspruch 1, wobei die ersten Benutzerinformationen einen Passcode umfassen.

3. Vorrichtung nach Anspruch 1, wobei die Gruppe einer Mehrzahl von Verbindungsrechten zugeordnet ist.

4. Vorrichtung nach Anspruch 1, wobei die ersten Gruppeninformationen wenigstens eines aus einem Bezeichner der Gruppe und einem dem Gruppenbezeichner zugeordneten Passwort umfassen.

5. Vorrichtung nach Anspruch 1, wobei:
die Empfangseinheit ferner ausgelegt ist zum Empfangen einer zweiten Anfrage aus einem entsprechenden (300, 400) der zweiten Kommunikationsgeräte, das erste Kommunikationsgerät zur Gruppe hinzuzufügen; und
die Steuereinheit ferner ausgelegt ist zum Ermitteln, ob die zweite Anfrage innerhalb der ersten Zeitdauer empfangen wird.

6. Vorrichtung nach Anspruch 5, wobei:
die zweite Anfrage Informationen umfasst, die einem zweiten Benutzer des entsprechenden zweiten Kommunikationsgeräts zugeordnet sind; und
die Steuereinheit ferner ausgelegt ist zum Ermitteln, ob die ersten Benutzerinformationen mit den zweiten Benutzerinformationen übereinstimmen, wenn die zweite Anfrage innerhalb der ersten Zeitdauer empfangen wird.

7. Vorrichtung nach Anspruch 6, wobei:
die zweite Anfrage zweite Informationen, die die Gruppe bezeichnen, umfasst; und
die Steuereinheit ferner ausgelegt ist zum Ermitteln, ob wenigstens ein Teil der ersten Gruppeninformationen mit einem entsprechenden Teil der zweiten Gruppeninformationen übereinstimmt, wenn die ersten Benutzerinformationen mit den zweiten Benutzerinformationen übereinstimmen.

8. Vorrichtung nach Anspruch 7, wobei die Steuereinheit ferner ausgelegt ist zum Zuordnen des ersten Kommunikationsgeräts zur Gruppe, wenn die ersten Gruppeninformationen mit den zweiten Gruppeninformationen übereinstimmen.

9. Vorrichtung nach Anspruch 6, wobei die Steuereinheit ferner ausgelegt ist zum Erzeugen von Informationen, die ein Nichterfolgen des Zuordnens des ersten Kommunikationsgeräts zur Gruppe anzeigen, wenn die zweite Anfrage nicht innerhalb der ersten Zeitdauer empfangen wird.

10. Vorrichtung nach Anspruch 5, wobei die Steuereinheit ferner ausgelegt ist zum:
Festlegen einer zweiten Zeitdauer für das Zuordnen des ersten Kommunikationsgeräts zur Gruppe, wenn die erste Anfrage nicht die ersten Benutzerinformationen umfasst, wobei die erste Zeitdauer die zweite Zeitdauer übersteigt; und
Ermitteln, ob die zweite Anfrage innerhalb der zweiten Zeitdauer empfangen wird.

11. Vorrichtung nach Anspruch 10, wobei:
die zweite Anfrage zweite Informationen, die die Gruppe bezeichnen, umfasst; und
die Steuereinheit ferner ausgelegt ist zum Ermitteln, ob wenigstens ein Teil der ersten Gruppeninformationen mit einem entsprechenden Teil der zweiten Gruppeninformationen übereinstimmt, wenn die zweite Anfrage innerhalb der zweiten Zeitdauer empfangen wird.

12. Vorrichtung nach Anspruch 11, wobei die Steuereinheit ferner ausgelegt ist zum Zuordnen des ersten Kommunikationsgeräts zur Gruppe, wenn der erste Gruppeninformationsteil mit dem zweiten Gruppeninformationsteil übereinstimmt.

13. Computerimplementiertes Verfahren, das umfasst:
Empfangen (606) einer ersten Anfrage aus einem ersten Kommunikationsgerät (410), einer Gruppe von zweiten Kommunikationsgeräten (161) beizutreten, wobei die erste Anfrage erste Informationen, die die Gruppe bezeichnen, umfasst, und die Gruppe wenigstens einem Verbindungsrecht zum Verbinden mit einem spezifizierten Netzwerk zugeordnet ist;
Zuordnen (613) des ersten Kommunikationsgeräts zur Gruppe unter Verwendung wenigstens eines Prozessors, auf der Basis zumindest der empfangenen Informationen;
Ermitteln, ob die erste Anfrage Informationen umfasst, die einem ersten Benutzer des ersten Kommunikationsgeräts zugeordnet sind; und
Festlegen einer ersten Zeitdauer zum Zuordnen des ersten Kommunikationsgeräts zur Gruppe, wenn die erste Anfrage die ersten Benutzerinformationen umfasst, und anderenfalls Festlegen einer zweiten Zeitdauer zum Zuzuordnen des ersten Kommunikationsgeräts zur Gruppe, die geringer ist als die erste Zeitdauer.

14. Kommunikationssystem, das umfasst:
eine Informationsverarbeitungsvorrichtung gemäß Anspruch 1; und
ein erstes Kommunikationsgerät;
eine Gruppe zweiter Kommunikationsgeräte (161), die wenigstens einem Verbindungsrecht zum Verbinden mit einem spezifizierten Netzwerk zugeordnet ist;
wobei das erste Kommunikationsgerät dazu ausgelegt ist, einen Befehl zu generieren, die erste Anfrage, einer Gruppe von zweiten Kommunikationsgeräten beizutreten, zu übertragen.

## Revendications

1. Appareil de traitement d'informations (200), comprenant :
une unité de réception (205) configurée pour recevoir, depuis un premier dispositif de communication (410), une première demande pour rejoindre un groupe de seconds dispositifs de communication (161), la première demande comprenant des premières informations identifiant le groupe, et le groupe étant associé à au moins un droit de connexion pour se connecter à un réseau spécifié ; et
une unité de commande (210) configurée pour associer le premier dispositif de communication au groupe, sur la base au moins des informations reçues ;
où l'unité de commande est en outre configurée pour :
déterminer si la première demande comprend des informations associées à un premier utilisateur du premier dispositif de communication ; et
établir une première période de temps pour associer le premier dispositif de communication au groupe, lorsque la première demande inclut les informations du premier utilisateur et, sinon, établir une seconde période, plus petite que la première période, pour associer le premier dispositif de communication au groupe.

2. Appareil selon la revendication 1, dans lequel les informations du premier utilisateur comprennent un mot de passe.

3. Appareil selon la revendication 1, dans lequel le groupe est associé à une pluralité de droits de connexion.

4. Appareil selon la revendication 1, dans lequel les informations du premier groupe comprennent au moins un élément parmi un identifiant du groupe et un mot de passe associé à l'identifiant du groupe.

5. Appareil selon la revendication 1, dans lequel :
l'unité de réception est en outre configurée pour recevoir, depuis un dispositif correspondant (300, 400) des seconds dispositifs de communication, une seconde demande d'ajout du premier dispositif de communication au groupe ; et
l'unité de commande est en outre configurée pour déterminer si la seconde demande est reçue au cours de la première période de temps.

6. Appareil selon la revendication 5, dans lequel :
la seconde demande comprend des informations associées à un second utilisateur du second dispositif de communication correspondant ; et
l'unité de commande est en outre configurée pour déterminer si les informations du premier utilisateur correspondent aux informations du second utilisateur, lorsque la seconde demande est reçue au cours de la première période de temps.

7. Appareil selon la revendication 6, dans lequel :
la seconde demande comprend des secondes informations identifiant le groupe ; et
l'unité de commande est en outre configurée pour déterminer si au moins une partie des informations du premier groupe correspondent à une partie correspondante des informations du second groupe, lorsque les informations du premier utilisateur correspondent aux informations du second utilisateur.

8. Appareil selon la revendication 7, dans lequel l'unité de commande est en outre configurée pour associer le premier dispositif de communication au groupe, lorsque les informations du premier groupe correspondent aux informations du second groupe.

9. Appareil selon la revendication 6, dans lequel l'unité de commande est en outre configurée pour générer des informations indicatives d'un échec pour associer le premier dispositif de communication au groupe, lorsque la seconde demande n'est pas reçue au cours de la première période de temps.

10. Appareil selon la revendication 5, dans lequel l'unité de commande est en outre configurée pour :
établir une seconde période de temps pour associer le premier dispositif de communication au groupe, lorsque la première demande n'inclut pas les informations du premier utilisateur, la première période de temps dépassant la seconde période de temps ; et
déterminer si la seconde demande est reçue au cours de la seconde période de temps.

11. Appareil selon la revendication 10, dans lequel :
la seconde demande comprend des secondes informations permettant d'identifier le groupe ; et
l'unité de commande est en outre configurée pour déterminer si au moins une partie des informations du premier groupe correspond à une partie correspondante des informations du second groupe, lorsque la seconde demande est reçue au cours de la seconde période de temps.

12. Appareil selon la revendication 11, dans lequel l'unité de commande est en outre configurée pour associer le premier dispositif de communication au groupe, lorsque la partie des informations du premier groupe correspond à la partie des informations du second groupe.

13. Procédé mis en oeuvre par ordinateur, comprenant les étapes suivantes :
recevoir (606), depuis un premier dispositif de communication (410), une première demande pour rejoindre un groupe de seconds dispositifs de communication (161), la première demande comprenant des premières informations identifiant le groupe, et le groupe étant associé à au moins un droit de connexion pour se connecter à un réseau spécifié ;
associer (613), au moyen d'au moins un processeur, le premier dispositif de communication au groupe, sur la base au moins des informations reçues ;
déterminer si la première demande comprend des informations associées à un premier utilisateur du premier dispositif de communication ; et
établir une première période de temps pour associer le premier dispositif de communication au groupe, lorsque la première demande inclut les informations du premier utilisateur et, sinon, établir une seconde période, plus petite que la première période, pour associer le premier dispositif de communication au groupe

14. Système de communication, comprenant :
un appareil de traitement d'informations selon la revendication 1 ; et
un premier dispositif de communication ;
un groupe de seconds dispositifs de communication (161) étant associés à au moins un droit de connexion pour se connecter à un réseau spécifié ;
où le premier dispositif de communication est configuré pour générer une instruction pour transmettre la première demande pour rejoindre le groupe des seconds dispositifs de communication.
